(19) Europäisches Patentamt / European Patent Office / Office européen des brevets

(11) **EP 4 542 594 A1**

(12) **EUROPEAN PATENT APPLICATION**
published in accordance with Art. 153(4) EPC

(43) Date of publication:
**23.04.2025 Bulletin 2025/17**

(21) Application number: **23824012.1**

(22) Date of filing: **16.06.2023**

(51) International Patent Classification (IPC):
*H01F 38/14* (2006.01)    *H01F 3/08* (2006.01)
*H01F 5/00* (2006.01)    *H01F 17/00* (2006.01)
*H01F 17/04* (2006.01)    *H01F 27/28* (2006.01)
*H01F 27/30* (2006.01)    *H01F 27/36* (2006.01)
*H02J 7/00* (2006.01)    *H02J 50/10* (2016.01)
*H02J 50/12* (2016.01)    *H02J 50/70* (2016.01)

(52) Cooperative Patent Classification (CPC):
**H01F 3/08; H01F 5/00; H01F 17/00; H01F 17/04;
H01F 27/28; H01F 27/30; H01F 27/36; H01F 38/14;
H02J 7/00; H02J 50/10; H02J 50/12; H02J 50/70**

(86) International application number:
**PCT/JP2023/022454**

(87) International publication number:
**WO 2023/243722 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.06.2022  JP 2022098132
15.11.2022  JP 2022182710
15.11.2022  JP 2022182783
22.02.2023  JP 2023026385**

(71) Applicant: **Dai Nippon Printing Co., Ltd.
Tokyo 162-8001 (JP)**

(72) Inventor: **OKABE Masato
Tokyo 162-8001 (JP)**

(74) Representative: **Müller-Boré & Partner
Patentanwälte PartG mbB
Friedenheimer Brücke 21
80639 München (DE)**

(54) **COIL COMPONENT, POWER TRANSMISSION DEVICE, POWER RECEPTION DEVICE, POWER TRANSMISSION SYSTEM, AND POWER TRANSMISSION METHOD**

(57)     A coil component 10 according to an embodiment includes a first planar coil 11, a second planar coil 12 that is stacked with the first planar coil 11, and a holding body 30 corresponding to a magnetic member that exerts magnetism and that includes a portion covering a surface of the first planar coil 11 opposite a surface that faces the second planar coil 12. The first planar coil 11 and the second planar coil 12 are connected to each other in series. The thickness of the second planar coil 12 is 0.15 mm or more and 0.35 mm or less.

**EP 4 542 594 A1**

FIG. 3

**Description**

Technical Field

The present disclosure relates to a coil component, a power transmitter, a power receiver, a power transmission system, and a power transmission method.

Background Art

Wireless power transmission systems that wirelessly transmit power are becoming widespread.

In the case where power is wirelessly transmitted, a high frequency current flows into, for example, a resonant circuit that includes a coil. In this case, a skin effect occurs at the coil. The skin effect leads to an increase in alternating-current resistance and an increase in power consumption due to heat generation. For this reason, the skin effect causes transmission efficiency to be decreased.

In the case where Litz wire is used as the coil, the skin effect is decreased. However, the Litz wire is composed of a large number of enameled wire lines that are twisted together, accordingly has high manufacturing costs, and needs time and effort for manufacture. The larger the size of the coil, the more the time and effort for manufacture. A known technique uses a planar coil that has a spiral plate shape and that has a rectangular conductor wire section (see JP2020-47614A). The planar coil can improve manufacturing efficiency regardless of the size of the coil. For this reason, the planar coil is suitable for a high-power wireless power transmission system for use in, for example, an electric vehicle, which is likely to have a large coil size.

As for the wireless power transmission system for use in the electric vehicle, a power transmitter is installed on a road surface such as parking, and a power receiver is installed on the electric vehicle. For example, in the case where the planar coil described above is used for the electric vehicle, the height dimensions of the power transmitter and the power receiver in particular can be decreased. For this reason, the planar coil described above usefully functions, for example, in the field of vehicles, which imposes strict restrictions on space.

Summary of Invention

As for devices into which coils such as power transmitters and/or power receivers are incorporated, typically, size is preferably inhibited from increasing, and weight is preferably decreased. In this case, the size and the weight are inhibited from increasing, and excellent transmission performance is more preferable.

It is an object of the present disclosure to provide a coil component, a power transmitter, a power receiver, and a power transmission system that enable size and weight to be inhibited from increasing and that enable performance to be improved, and a power transmission method that is highly efficient.

An embodiment of the present disclosure relates to [1] to [77] described below.

[1] A coil component includes:

a first planar coil;

a second planar coil that is stacked with the first planar coil; and

a magnetic member that exerts magnetism and that includes a portion covering a surface of the first planar coil opposite a surface that faces the second planar coil, and

the first planar coil and the second planar coil are connected to each other in series, and a thickness of the second planar coil is 0.15 mm or more and 0.35 mm or less.

[2] The first planar coil and the second planar coil are configured such that an alternating current at 79 KHz or more and 90 KHz or less is applied, or an alternating magnetic field at 79 KHz or more and 90 KHz or less is applied, as for the coil component described in [1].

[3] The coil component described in [1] or [2] further includes: a first magnetic shield member that faces a surface of the covering portion of the magnetic member opposite a surface that faces the first planar coil; and

a second magnetic shield member that faces a surface of the first magnetic shield member opposite a surface that faces the covering portion of the magnetic member, and

a material of the first magnetic shield member and a material of the second magnetic shield member differ from each other.

[4] Volume resistivity of the first magnetic shield member is higher than volume resistivity of the second magnetic shield member, and
relative permeability of the first magnetic shield member is higher than relative permeability of the second magnetic shield member, as for the coil component described in [3].

[5] The first magnetic shield member contains ferrite in a plate form, as for the coil component described in [3] or [4].

[6] Relative permeability of the first magnetic shield member is 500 or more, as for the coil component described in any one of [3] to [5].

[7] The second magnetic shield member contains aluminum, as for the coil component described in any one of [3] to [6].

[8] The covering portion of the magnetic member entirely covers the opposite surface of the first planar coil, as for the coil component described in any one of [1] to [7].

[9] The covering portion of the magnetic member partly covers the opposite surface of the first planar coil, as for the coil component described in any one of [1] to [7].

[10] The magnetic member includes multiple pieces that are separated from each other, as for the coil component described in [9].

[11] The first planar coil includes a straight portion that linearly extends and a corner portion that is connected to the straight portion and that curves, and
the covering portion of the magnetic member covers the straight portion but does not cover the corner portion, as for the coil component described in [9] or [10].

[12] A power transmitter includes the coil component described in any one of [1] to [11].

[13] The power transmitter described in [12] further includes a high-frequency current applying unit that applies an alternating current at 79 KHz or more and 90 KHz or less to the coil component.

[14] A power receiver includes the coil component described in any one of [1] to [11].

[15] The power receiver described in [14] further includes a converter that converts an alternating current at 79 KHz or more and 90 KHz or less that the coil component generates due to electromagnetic induction into a direct current.

[16] A power transmission system includes a power transmitter, and a power receiver, and at least the power transmitter or the power receiver includes the coil component described in any one of [1] to [11].

[17] A power transmission method includes a step of applying an alternating current at 79 KHz or more and 90 KHz or less to the coil component of a power transmitter that includes the coil component described in any one of [1] to [11], and
a step of causing a power receiver to generate an electric current, based on a magnetic field that is generated by the power transmitter.

[18] A coil component includes:

a first planar coil;

a second planar coil that is stacked with the first planar coil; and

a magnetic member that exerts magnetism and that includes a portion covering a surface of the first planar coil opposite a surface that faces the second planar coil, and

the first planar coil and the second planar coil are connected to each other in series, and a thickness of the second planar coil is 0.225 mm or more and 0.275 mm or less, and

the first planar coil and the second planar coil are configured such that an alternating current at 100 KHz or more and less than 200 KHz is applied, or an alternating magnetic field at 100 KHz or more and less than 200 KHz is applied.

[19] A coil component includes:

a first planar coil;

a second planar coil that is stacked with the first planar coil; and

a magnetic member that exerts magnetism and that includes a portion covering a surface of the first planar coil opposite a surface that faces the second planar coil, and

the first planar coil and the second planar coil are connected to each other in series, and a thickness of the second planar coil is 0.075 mm or more and 0.175 mm or less, and

the first planar coil and the second planar coil are configured such that an alternating current at 200 KHz or more and 1 MHz or less is applied, or an alternating magnetic field at 200 KHz or more and 1 MHz or less is applied.

[20] A coil component includes:

a first planar coil;

a second planar coil that is stacked with the first planar coil; and

a magnetic member that exerts magnetism and that includes a portion covering a surface of the first planar coil opposite a surface that faces the second planar coil,

the first planar coil and the second planar coil are connected to each other in series,

a thickness of the second planar coil is 0.45 mm or more, and

the first planar coil and the second planar coil are configured such that an alternating current at 1.1 MHz or more is applied, or an alternating magnetic field at 1.1 MHz or more is applied.

[21] A coil component includes:

a first planar coil;

a second planar coil that is stacked with the first planar coil;

a holding body that exerts magnetism and that includes a portion covering a surface of the first planar coil opposite a surface that faces the second planar coil; and

a magnetic shield member that faces a surface of the holding body opposite a surface that faces the first planar coil, and

the first planar coil and the second planar coil are connected to each other in series, and a thickness of the second planar coil is 0.15 mm or more and 0.35 mm or less.

[22] The first planar coil and the second planar coil are configured such that an alternating current at 79 KHz or more and 90 KHz or less is applied, or an alternating magnetic field at 79 KHz or more and 90 KHz or less is applied, as for the coil component described in [21].

[23] A thickness of the first planar coil is 0.1 mm or more and 1.0 mm or less, as for the coil component described in [21] or [22].

[24] The first planar coil and the second planar coil overlap at an interval, and the interval is 0.5 mm or more and 1.5 mm or less, as for the coil component described in any one of [21] to [23].

[25] The holding body integrally holds the first planar coil and the second planar coil with the first planar coil and the second planar coil overlapping at an interval, and the holding body further includes a portion that covers a side surface of the first planar coil and a portion that fills the interval, as for the coil component described in any one of [21] to [24].

[26] The holding body contains resin and a magnetic material particle that is held by the resin, as for the coil component described in any one of [21] to [25].

[27] Relative permeability of the holding body is 5.0 or more, as for the coil component described in any one of [21] to [26].

[28] The holding body includes a wall portion that protrudes from the second planar coil, as for the coil component described in any one of [21] to [27].

[29] The magnetic shield member contains ferrite in a plate form, as for the coil component described in any one of [21] to [28].

[30] Relative permeability of the magnetic shield member is 500 or more, as for the coil component described in any one of [21] to [29].

[31] The first planar coil and the second planar coil include respective multiple turn portions that are arranged in directions perpendicular to respective central axes, one of the multiple turn portions of the first planar coil and one of the multiple turn portions of the second planar coil partly overlap in an axial direction of the first planar coil, and a portion of the turn portion of the first planar coil and a portion of the turn portion of the second planar coil that overlap in the axial direction of the first planar coil are parallel with each other, as for the coil component described in any one of [21] to [30].

[32] A material of the first planar coil and a material of the second planar coil are the same, as for the coil component described in any one of [21] to [31].

[33] The number of turns of the first planar coil and the number of turns of the second planar coil are 4 or more and 12 or less, as for the coil component described in any one of [21] to [32].

[34] The first planar coil and the second planar coil are sized so as to be within a squire a side of which is 800 mm, as for the coil component described in any one of [21] to [33].

[35] The coil component described in any one of [21] to [34] further includes an even number of other planar coils that are disposed between the first planar coil and the second planar coil, the first planar coil, the other planar coils, and the second planar coil are connected to each other in series, and of a planar coil that is connected to the first planar coil and a planar coil that differs from the planar coil among the other planar coils, at least a thickness of the planar coil that differs is 0.15 mm or more and 0.35 mm or less.

[36] A thickness of the planar coil that is connected to the first planar coil among the other planar coils is 0.15 mm or more and 0.35 mm or less, as for the coil component described in [25].

[37] A power transmitter includes the coil component described in any one of [21] to [36].

[38] The power transmitter described in [37] further includes a high-frequency current applying unit that applies an alternating current at 79 KHz or more and 90 KHz or less to the coil component.

[39] A power receiver includes the coil component described in any one of [21] to [36].

[40] The power receiver described in [39] further includes a converter that converts an alternating current at 79 KHz or more and 90 KHz or less that the coil component generates due to electromagnetic induction into a direct current.

[41] A power transmission system includes a power transmitter, and a power receiver, and at least the power transmitter or the power receiver includes the coil component described in any one of [21] to [36].

[42] A power transmission method includes a step of applying an alternating current at 79 KHz or more and 90 KHz or less to the coil component of a power transmitter that includes the coil component described in any one of [21] to [36], and a step of receiving, by using a power receiver, a magnetic field that is generated by the power transmitter.

[43] A coil component includes:

a first planar coil;

a second planar coil that is stacked with the first planar coil;

a holding body that exerts magnetism, that holds at least the first planar coil, and that includes a portion covering a surface of the first planar coil opposite a surface that faces the second planar coil;

a magnetic shield member that faces a surface of the covering portion of the holding body opposite a surface that faces the first planar coil;

the first planar coil and the second planar coil are connected to each other in series,

the first planar coil contains aluminum, and

a thickness of the second planar coil is 0.15 mm or more and 0.35 mm or less.

[44] A thickness of the first planar coil is more than the thickness of the second planar coil, as for the coil component described in [43].

[45] Specific gravity of the second planar coil is more than specific gravity of the first planar coil, and conductivity of the second planar coil is more than conductivity of the first planar coil, as for the coil component described in [43] or [44].

[46] The second planar coil contains copper, as for the coil component described in any one of [43] to [45].

[47] The first planar coil and the second planar coil are configured such that an alternating current at 79 KHz or more and 90 KHz or less is applied, or an alternating magnetic field at 79 KHz or more and 90 KHz or less is applied, as for the coil component described in any one of [43] to [46].

[48] A thickness of the first planar coil is 0.5 mm or more and 1.0 mm or less, as for the coil component described in any one of [43] to [47].

[49] A sum of weight of the first planar coil per one square meter and weight of the second planar coil per one square meter is 5.0 Kg/m$^2$ or less, as for the coil component described in any one of [43] to [48].

[50] The holding body integrally holds the first planar coil and the second planar coil with the first planar coil and the second planar coil overlapping at an interval, and the holding body further includes a portion that covers a side surface of the first planar coil and a portion that fills the interval, as for the coil component described in any one of [43] to [49].

[51] The holding body contains resin and a magnetic material particle that is held by the resin, as for the coil component described in any one of [43] to [50].

[52] Relative permeability of the holding body is 5.0 or more, as for the coil component described in any one of [43] to [51].

[53] The holding body includes a wall portion that protrudes from the second planar coil, as for the coil component described in any one of [43] to [52].

[54] The magnetic shield member contains ferrite in a plate form, as for the coil component described in any one of [43] to [53].

[55] Relative permeability of the magnetic shield member is 500 or more, as for the coil component described in any one of [43] to [54].

[56] The coil component described in any one of [43] to [55] further includes an even number of other planar coils that are disposed between the first planar coil and the second planar coil, the first planar coil, the other planar coils, and the second planar coil are connected to each other in series, and of a planar coil that is connected to the first planar coil and a planar coil that differs from the planar coil among the other planar coils, at least a thickness of the planar coil that differs is 0.15 mm or more and 0.35 mm or less.

[57] A thickness of the planar coil that is connected to the first planar coil among the other planar coils is 0.15 mm or more and 0.35 mm or less, as for the coil component described in [56].

[58] A power transmitter includes the coil component described in any one of [43] to [57].

[59] The power transmitter described in [58] further includes a high-frequency current applying unit that applies an alternating current at 79 KHz or more and 90 KHz or less to the coil component.

[60] A power receiver includes the coil component described in any one of [43] to [57].

[61] The power receiver described in [60] further includes a converter that converts an alternating current at 79 KHz or more and 90 KHz or less that the coil component generates due to electromagnetic induction into a direct current.

[62] A power transmission system includes a power transmitter, and a power receiver, and
at least the power transmitter or the power receiver includes the coil component described in any one of [43] to [57].

[63] A power transmission method includes a step of applying an alternating current at 79 KHz or more and 90 KHz or less to the coil component of a power transmitter that includes the coil component described in any one of [43] to [57], and
a step of receiving, by using a power receiver, a magnetic field that is generated by the power transmitter.

[64] A coil component includes:

a first planar coil;
a second planar coil that is stacked with the first planar coil;
a magnetic member that exerts magnetism and that includes a portion covering a surface of the first planar coil opposite a surface that faces the second planar coil; and
a magnetic shield member that faces a surface of the covering portion of the magnetic member opposite a surface that faces the first planar coil,
the first planar coil and the second planar coil are connected to each other in series,
a thickness of the second planar coil is 0.225 mm or more and 0.275 mm or less, and
the first planar coil and the second planar coil are configured such that an alternating current at 100 KHz or more and less than 200 KHz is applied, or an alternating magnetic field at 100 KHz or more and less than 200 KHz is applied.

[65] A coil component includes:

a first planar coil;

a second planar coil that is stacked with the first planar coil;

a magnetic member that exerts magnetism and that includes a portion covering a surface of the first planar coil opposite a surface that faces the second planar coil; and

a magnetic shield member that faces a surface of the covering portion of the magnetic member opposite a surface that faces the first planar coil,

the first planar coil and the second planar coil are connected to each other in series,

a thickness of the second planar coil is 0.075 mm or more and 0.175 mm or less, and

the first planar coil and the second planar coil are configured such that an alternating current at 200 KHz or more and 1 MHz or less is applied, or an alternating magnetic field at 200 KHz or more and 1 MHz or less is applied.

[66] A coil component includes:

a first planar coil;

a second planar coil that is stacked with the first planar coil;

a magnetic member that exerts magnetism and that includes a portion covering a surface of the first planar coil opposite a surface that faces the second planar coil; and

a magnetic shield member that faces a surface of the covering portion of the magnetic member opposite a surface that faces the first planar coil,

the first planar coil and the second planar coil are connected to each other in series,

a thickness of the second planar coil is 0.45 mm or more, and

the first planar coil and the second planar coil are configured such that an alternating current at 1.1 MHz or more is applied, or an alternating magnetic field at 1.1 MHz or more is applied.

[67] The first planar coil contains copper or aluminum, and the second planar coil contains copper, as for the coil component described in any one of [64] to [66].

[68] The magnetic member contains resin and a magnetic material particle that is held by the resin, as for the coil component described in any one of [64] to [67].

[69] Relative permeability of the magnetic member is 5.0 or more, as for the coil component described in any one of [64] to [68].

[70] The magnetic shield member contains ferrite in a plate form, as for the coil component described in any one of [64] to [69].

[71] Relative permeability of the magnetic shield member is 500 or more, as for the coil component described in any one of [64] to [70].

[72] A power transmitter includes the coil component described in any one of [64] to [71], and a high-frequency current applying unit that applies the alternating current to the coil component.

[73] A power receiver includes the coil component described in any one of [64] to [71], and a converter that converts an alternating current that the coil component generates due to electromagnetic induction into a direct current.

[74] A power transmission system includes a power transmitter, and a power receiver, and
at least the power transmitter or the power receiver includes the coil component described in any one of [64] to [71].

[75] A power transmission method includes: a step of applying an alternating current at 100 KHz or more and less than 200 KHz to the coil component of a power transmitter that includes the coil component described in [64]; and
a step of causing a power receiver to generate an electric current, based on a magnetic field that is generated by the power transmitter.

[76] A power transmission method includes: a step of applying an alternating current at 200 KHz or more and 1 MHz or less to the coil component of a power transmitter that includes the coil component described in [65]; and
a step of causing a power receiver to generate an electric current, based on a magnetic field that is generated by the power transmitter.

[77] A power transmission method includes: a step of applying an alternating current at 1.1 MHz or more to the coil component of a power transmitter that includes the coil component described in [66]; and
a step of causing a power receiver to generate an electric current, based on a magnetic field that is generated by the power transmitter.

According to the present disclosure, size and weight can be inhibited from increasing, and performance can be improved.

Brief Description of Drawings

[Fig. 1] Fig. 1 schematically illustrates a wireless power transmission system in which a coil component according to an embodiment is used.

[Fig. 2] Fig. 2 is a perspective view of a coil component according to an embodiment.

[Fig. 3] Fig. 3 is an exploded perspective view of the coil component illustrated in Fig. 2.

[Fig. 4] Fig. 4 is a perspective view of a section of the coil component taken along a line IV-IV in Fig. 2 from above.

[Fig. 5] Fig. 5 is a sectional view of the coil component taken along the line IV-IV in Fig. 2.

[Fig. 6] Fig. 6 is a graph illustrating the result of simulation regarding the evaluation of the performance of the coil component.

[Fig. 7] Fig. 7 is a graph illustrating the result of simulation regarding the evaluation of the performance of the coil component.

[Fig. 8] Fig. 8 is a graph illustrating the result of simulation regarding the evaluation of the performance of the coil component.

[Fig. 9] Fig. 9 is a sectional view of a coil component according to another embodiment.

[Fig. 10] Fig. 10 is a sectional view of a coil component according to another embodiment.

[Fig. 11] Fig. 11 is a plan view of a coil component according to another embodiment.

[Fig. 12] Fig. 12 is a sectional view of the coil component taken along a line XI-XI illustrated in Fig. 11.

[Fig. 13] Fig. 13 is a sectional view of a coil component according to another embodiment.

[Fig. 14] Fig. 14 is a plan view of a coil component according to another embodiment.

[Fig. 15] Fig. 15 is a bottom view of the coil component illustrated in Fig. 14.

[Fig. 16] Fig. 16 is a sectional view of the coil component illustrated in Fig. 14.

[Fig. 17] Fig. 17 illustrates a graph for describing a relationship between resistance and the thickness of a planar coil of the coil component according to the embodiment illustrated in Fig. 2 to Fig. 5.

[Fig. 18] Fig. 18 illustrates a graph for describing a relationship between a Q value and the thickness of the planar coil of the coil component according to the embodiment illustrated in Fig. 2 to Fig. 5.

Description of Embodiments

Embodiments will hereinafter be described with reference to the drawings.
In the present specification, words such as a "sheet", a "film", and a "plate" are not distinguished from each other only based on different names. Accordingly, for example, the "sheet" has a concept that includes a member that can be referred to as a film or a plate.

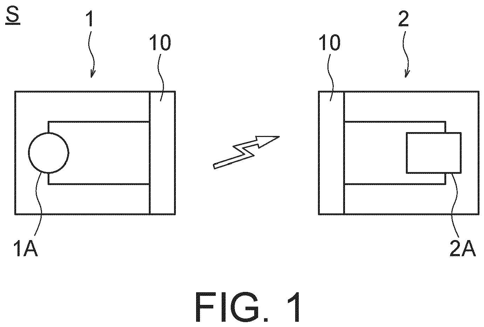

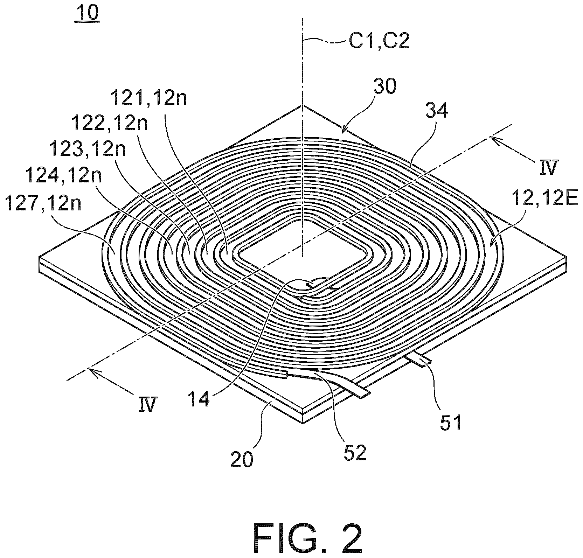

Fig. 1 schematically illustrates a wireless power transmission system S in which coil components 10 according to an embodiment described later with reference to, for example, Fig. 2 to Fig. 5 are used. The wireless power transmission system S (referred to below as the power transmission system S) will now be described with reference to Fig. 1.

<Wireless Power Transmission System>

The power transmission system S includes a power transmitter 1 and a power receiver 2. The power transmitter 1 includes a coil component 10 and a high-frequency current applying unit 1A. The coil component 10 of the power transmitter 1 functions as a power transmission coil. The high-frequency current applying unit 1A applies a high-frequency current to the coil component 10 that functions as the power transmission coil.

The power receiver 2 includes a coil component 10 and a converter 2A. The coil component 10 of the power receiver 2 functions as a power reception coil. The converter 2A modulates a high-frequency current that is generated at the coil component 10. For example, the converter 2A includes a rectifier circuit that converts the high-frequency current into a direct current. For example, the converter 2A may be configured to include a full-wave rectifier circuit that includes multiple diodes and a smoothing capacitor.

According to the present embodiment, the power transmitter 1 and the power receiver 2 include the respective coil components 10. However, the power transmitter 1 or the power receiver 2 may include the coil component 10, and another coil component may be used for the other. It goes without saying that a coil component according to another embodiment described later different from the coil component 10 may be used for the power transmitter 1 and/or the power receiver 2.

When power is wirelessly (non-contact) transmitted from the power transmitter 1 to the power receiver 2, the power transmitter 1 applies a high-frequency current at a predetermined frequency from the high-frequency current applying unit 1A to the coil component 10 that functions as the power transmission coil. At this time, a magnetic field is generated at the coil component 10 due to electromagnetic induction. As for the power receiver 2, a high-frequency current is generated at the coil component 10 that functions as the power reception coil due to the influence of the magnetic field. That is, the power receiver 2 receives the magnetic field or is affected by the magnetic field and causes the high-frequency current to flow due to the electromagnetic induction. The converter 2A converts the high-frequency current into a direct current and applies the converted direct current to, for example, a battery not illustrated.

For example, each coil component 10 according to the embodiment described below is manufactured such that performance is improved in the case where an alternating current at 75 KHz or more and 100 KHz or less is applied, or an alternating magnetic field at 75 KHz or more and 100 KHz or less is applied. Specifically, the coil component 10 is manufactured such that the performance is particularly improved in the case where an alternating current at 79 KHz or more and 90 KHz or less, particularly, an alternating current at 85 KHz is applied, or an alternating magnetic field at 79 KHz or more and 90 KHz or less, particularly, an alternating magnetic field at 85 KHz is applied. Accordingly, for example, the high-frequency current applying unit 1A may apply the alternating current at 75 KHz or more and 100 KHz or less, the alternating current at 79 KHz or more and 90 KHz or less, or the alternating current at 85 KHz such that the alternating current is preferable to the coil component 10. The converter 2A may convert the alternating current at 85 KHz, the alternating current at 79 KHz or more and 90 KHz or less, or an alternating current at 75 KHz to 100 KHz that is generated due to the electromagnetic induction when the alternating magnetic field is applied into the direct current. In the case where the coil components that are incorporated into the power transmitter 1 and the power receiver 2 are configured to successfully function in a frequency band that differs from the frequency bands described above by way of example, the high-frequency current applying unit 1A and the converter 2A are configured to be suitable for the frequency band that differs from the frequency bands described above by way of example. For example, the high-frequency current applying unit 1A may be configured to apply an alternating current at 100 KHz or more and 200 KHz or less.

A power transmission method that is used for the power transmission system S illustrated in Fig. 1 is a magnetic resonance method. However, the coil component 10 according to the present embodiment may be used for a power transmission system in an electromagnetic induction method. The power transmission system S is configured to transmit power wirelessly to an electric vehicle. In this case, the power transmitter 1 is installed on a road or parking. The power receiver 2 is installed on the electric vehicle.

However, the use of the power transmission system S is not limited to power transmission to the electric vehicle. For example, the power transmission system S may be used for power transmission to a flying object such as a drone or a robot. The power transmission system S may be used for power transmission to a submersible in a sea or an exploration robot. The use of the coil component 10 is not limited to a wireless power transmission system. For example, the coil component 10 may be used for a transformer, a DC-DC converter, or an antenna.

<Coil Component>

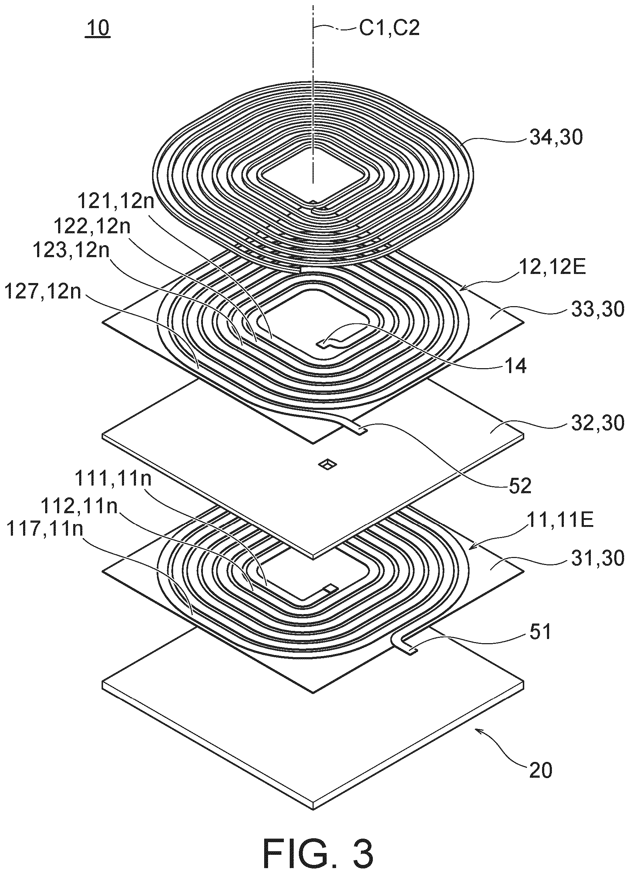

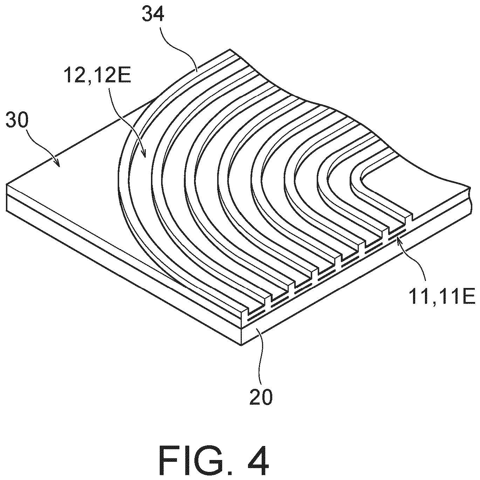

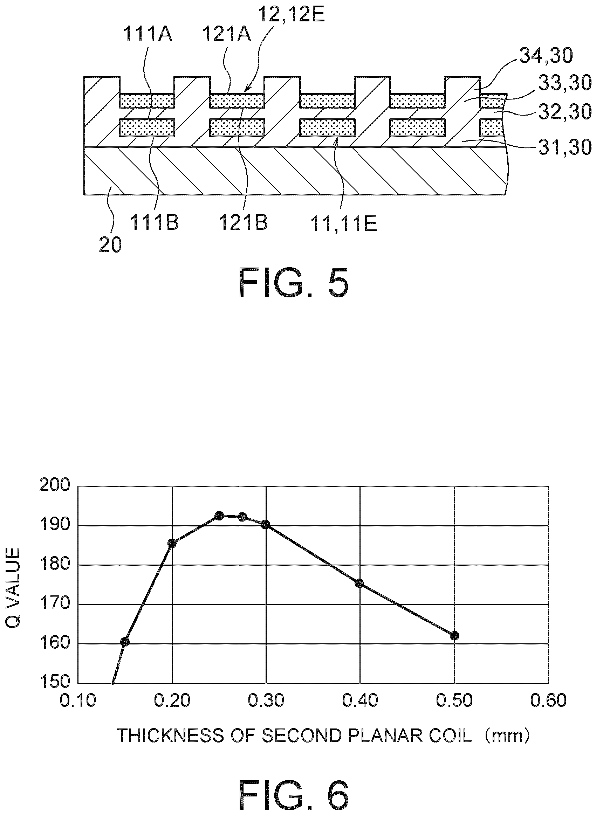

Each coil component 10 will now be described. Fig. 2 is a perspective view of the coil component 10. Fig. 3 is an exploded perspective view of the coil component 10. Fig. 4 is a perspective view of a section of the coil component 10 taken along a line IV-IV in Fig. 2 from above. Fig. 5 is a sectional view of the coil component 10 taken along the line IV-IV in Fig. 2.

As illustrated in Fig. 2 to Fig. 5, the coil component 10 includes a first planar coil 11, a second planar coil 12, a magnetic shield member 20, a holding body 30, a first connection terminal 51, and a second connection terminal 52. In Fig. 3, for convenience of description, the holding body 30 is illustrated so as to be divided into a first layer 31, a second layer 32, a third layer 33, and a wall portion 34. In practice, however, as illustrated in Fig. 5, the first layer 31, the second layer 32, the third layer 33, and the wall portion 34 have no joints and are formed into a single body.

The first planar coil 11 and the second planar coil 12 are connected to each other in series and overlap at an interval. The holding body 30 includes a portion that covers a surface of the first planar coil 11 opposite a surface that faces the second planar coil 12 (a portion of the first layer 31 illustrated in Fig. 3 and Fig. 5). The magnetic shield member 20 faces a surface of the holding body 30 (precisely, the covering portion of the holding body 30) opposite a surface that faces the first planar coil 11. Also, the magnetic shield member 20 includes a portion that covers the surface of the first planar coil 11 opposite the surface that faces the second planar coil 12. Specifically, the magnetic shield member 20 includes the portion that covers the surface of the first planar coil 11 opposite the surface that faces the second planar coil 12 with the first layer 31 of the holding body 30 interposed therebetween. The first layer 31, the second layer 32, the third layer 33, and the wall portion 34 that are included in the holding body 30 will be described in detail later.

(First Planar Coil and Second Planar Coil)

The first planar coil 11 has a spiral shape and is composed of a conductive material. According to the present embodiment, the first planar coil 11 is composed of copper but may be composed of aluminum, provided that the first planar coil 11 is composed of a conductive material. The first planar coil 11 has a plate shape. As illustrated in Fig. 4 and Fig. 5, a sectional shape of the first planar coil 11 in a direction perpendicular to a direction in which the first planar coil 11 turns in the spiral shape is a rectangular shape.

A reference sign C1 illustrated in Fig. 2 and Fig. 3 represents the first central axis of the first planar coil 11 that passes through the center of the spiral shape of the first planar coil 11. In the case where the axial direction of the first planar coil 11 is mentioned below, the direction means a direction that extends along the first central axis C1 or a direction parallel with the first central axis C1. A direction perpendicular to the first central axis C1 is referred to as a radial direction of the first planar coil 11.

The first planar coil 11 includes a conductor 11E that has a spiral shape formed by multiple turn portions 11n. The multiple turn portions 11n of the first planar coil 11 are arranged in the direction perpendicular to the first central axis C1 of the spiral shape. Specifically, the multiple turn portions 11n are connected so as to be increasingly far away from the first central axis C1 outward in the radial direction from the first central axis C1 of the spiral shape. Consequently, the spiral shape is formed.

The turn portions 11n are basically formed so as to turn 360 degrees around the first central axis C1 such that linear conductive portions do not form an annular shape. In the case of a so-called planar coil, both end portions of each turn portion 11n are shifted in the radial direction. As for the multiple turn portions 11n, an outer end portion of one of the turn portions 11n in the radial direction is connected to an inner end portion of another turn portion 11n in the radial direction, and the other turn portion 11n extends so as to be far away from the first central axis C1.

In some cases below, one nearest to the first central axis C1 among the multiple turn portions 11n is referred to as a turn portion 111. In some cases, a turn portion that is connected to the turn portion 111 is referred to as a turn portion 112. According to the present embodiment, the multiple turn portions 11n include seven turn portions 111 to 117. In the following description for common matters among the multiple turn portions 11n, these are basically referred to as the turn portions 11n.

According to the present embodiment, the turn portions 11n turn so as to form a rectangular shape. However, the turn portions 11n may turn so as to form a circular shape. The spiral shape described in the present specification and the present disclosure means a shape of a planar curve that is helically wound. The planar curve described herein includes a planar pattern that repeatedly turns while curving as in a polyline as illustrated. In other words, the spiral shape is a shape that turns so as to gradually extend outward around the first central axis C1 of the first planar coil 11.

An inner end portion (an end portion near the first central axis C1) in the radial direction of the turn portion 111 nearest to the first central axis C1 is electrically connected to the second planar coil 12. A connection wiring line portion 14 illustrated in Fig. 2 and Fig. 3 is a conductor and electrically connects the turn portion 111 and the second planar coil 12 to each other in series. For example, the connection wiring line portion 14 illustrated and the second planar coil 12 are formed into a single body. The connection wiring line portion 14 may be connected to the turn portion 111 through ultrasonic connection. An outer end portion (an end portion that is distal from the first central axis C1) in the radial direction of the turn portion 117 farthest from the first central axis C1 among the multiple turn portions 11n is connected to the first connection terminal 51.

The phrase "inner in the radial direction of the first planar coil 11 (the turn portions 11n)" described herein means a radial direction toward the first central axis C1. The phrase "outer in the radial direction of the first planar coil 11 (the turn portions 11n)" described herein means a radial direction away from the first central axis C1. According to the present embodiment, the first central axis C1 is determined as follows. Linear imaginary turn portions each of which has a shape similar to that of the turn portion 111 that is innermost are sequentially drawn from the inner end portion of the radial direction of the turn portion 111 that is innermost so as to form a spiral shape inward in the radial direction. Drawing continues until an imaginary turn portion is drawn within a diameter of 1 cm. A line that passes through an inner region in the radial direction of the imaginary turn portion that is drawn within a diameter of 1 cm in a direction perpendicular to the radial direction and to the circumferential direction of the spiral shape is determined as the first central axis C1.

For example, the first planar coil 11 according to the present embodiment is formed into the spiral shape by being punched from a copper plate. However, the first planar coil 11 can be formed by etching copper foil into the spiral shape.

For example, the thickness (the thickness of the conductor 11E) of the first planar coil 11 may be 0.1 mm or more and 1.0 mm or less. The radius (a distance to a portion farthest from the first central axis C1 in the radial direction) of the first planar coil 11 may be 80 mm or more or may be 80 mm or more and 450 mm or less. The aspect ratio of the first planar coil 11 (the conductor 11E) a sectional shape of which is a rectangular shape is determined by dividing the radial width (the width in the radial direction) of the first planar coil 11 (the conductor 11E) by the thickness of the first planar coil 11 (the conductor 11E). The aspect ratio of the first planar coil 11 (the conductor 11E) may be 2 or more and 12 or less or may be 3 or more and 10 or less.

In the case where power is transmitted to the electric vehicle by using the magnetic resonance method, a power of 1 Kw or more, preferably, 5 Kw or more can be preferably transmitted in the frequency band of the high-frequency current at 10 KHz to 200 KHz, particularly, at 75 KHz or more and 100 KHz or less, or at 79 KHz to 90 KHz. In this case, the thickness of the first planar coil 11 composed of copper is preferably 0.2 mm or more. When the thickness of the first planar coil 11 is too great, the weight thereof increases, and this is not preferable for, for example, a vehicle. For this reason, for example, the thickness of the first planar coil 11 may be 2.0 mm or less, may be 1.5 mm or less, or may be 1.0 mm or less. In the case where power is transmitted to the electric vehicle, an excessive size is not preferable, and restriction on size is imposed in some cases. In this perspective, the first planar coil 11 and the second planar coil 12 described later, specifically, the conductor 11E of the first planar coil 11 and a conductor 12E of the second planar coil 12 are preferably formed so as to be within a squire a side of which is 800 mm in size.

The line width (the line width of the conductor 11E) of the first planar coil 11, that is, the radial width (the width in the radial direction) of each turn portion 11n is not particularly limited. In consideration that a power of 1 Kw or more, preferably, 5 Kw or more is made transmissive in the frequency band of the high-frequency current at, for example, 79 KHz to 90 KHz, the radial width of each turn portion 11n may be 2 mm or more and 20 mm or less, or may be 2 mm or more and 16 mm or less, 2 mm or more and 12 mm or less, or 2 mm or more and 8 mm or less. The number of turns of the first planar coil 11 may be 4 or more and 12 or less but is not particularly limited.

Also, the second planar coil 12 has a spiral shape, and the second planar coil 12 is composed of copper according to the present embodiment. The material of the second planar coil 12 is not particularly limited but is the same as the material of the first planar coil 11. The material of the first planar coil 11 and the material of the second planar coil 12 may differ from each other. Also, the second planar coil 12 has a plate shape, and as illustrated in Fig. 4 and Fig. 5, a sectional shape of the second planar coil 12 in a direction perpendicular to a direction in which the second planar coil 12 turns in the spiral shape is a rectangular shape.

A reference sign C2 illustrated in Fig. 2 and Fig. 3 represents the second central axis of the second planar coil 12 that passes through the center of the spiral shape of the second planar coil 12. In the case where the axial direction of the second planar coil 12 is mentioned below, the direction means a direction that extends along the second central axis C2 or a direction parallel with the second central axis C2. A direction perpendicular to the second central axis C2 is referred to as a radial direction of the second planar coil 12.

According to the present embodiment, the second planar coil 12 is disposed coaxially with the first planar coil 11. That is, the first central axis C1 of the first planar coil 11 and the second central axis C2 of the second planar coil 12 match each other, in other words, are along the same line. However, the first planar coil 11 and the second planar coil 12 may overlap such that the first central axis C1 of the first planar coil 11 and the second central axis C2 of the second planar coil 12 are parallel with each other. That is, the first planar coil 11 and the second planar coil 12 may not be coaxial with each other.

The second planar coil 12 includes the conductor 12E that has a spiral shape formed by multiple turn portions 12n. The multiple turn portions 12n of the second planar coil 12 are arranged in the direction perpendicular to the second central axis C2 of the spiral shape.

The names (such as a turn portion 121) depending on positions and the connection form of the multiple turn portions 12n are similar to those of the turn portions 11n of the first planar coil 11. According to the present embodiment, the number of turns of the first planar coil 11 and the number of turns of the second planar coil 12 are equal to each other, and the multiple turn portions 12n include seven turn portions 121 to 127. The turn portions 12n turn so as to form a rectangular shape as in the turn portions 11n. The turn portions 11n may turn so as to form a circular shape. The number of turns of the first planar coil 11 and the number of turns of the second planar coil 12 may differ from each other. For example, the turn portions 12n may have a rectangular shape, and the turn portions 12n may have a circular shape.

According to the present embodiment, as illustrated in Fig. 4, one of the multiple turn portions 11n of the first planar coil 11 and one of the multiple turn portions 12n of the second planar coil 12 partly overlap in the axial direction of the first planar coil 11. A portion of the turn portion 11n of the first planar coil 11 and a portion of the turn portion 12n of the second planar coil 12 that overlap in the axial direction of the first planar coil 11 are parallel with each other with the directions in which these turn being parallel with each other. The phrase "with the directions in which these turn being parallel with each other" means that the direction in which the first planar coil 11 turns and the direction in which the second planar coil 12 turns do not intersect with each other at a point but overlap along the same line at a certain distance.

The portion of the turn portion 11n of the first planar coil 11 and the portion of the turn portion 12n of the second planar coil 12 that overlap in parallel with each other as described above may have a length of 1/2 or more or 3/4 or more of the entire length. The inventor has found that as the proportion of the portions of the first planar coil 11 and the second planar coil 12 that overlap in parallel with each other increases, an eddy current loss is likely to decrease.

The inner end portion in the radial direction of the turn portion 111 nearest to the first central axis C1 is electrically connected to the second planar coil 12 as described above. Specifically, the inner end portion in the radial direction of the turn portion 111 is connected to an inner end portion of the turn portion 121 of the second planar coil 12 with the connection wiring line portion 14 interposed therebetween. With the first planar coil 11 and the second planar coil 12 connected to each other, a direction in which the first planar coil 11 turns from an end portion (the outer end portion in the radial direction of the turn portion 117) that is not connected to the second planar coil 12 to an end portion that is connected to the second planar coil 12 is the same as a direction in which the second planar coil 12 turns from an end portion that is connected to the first planar coil 11 to an end portion (an outer end portion in the radial direction of the turn portion 127) that is not connected to the first planar coil 11.

The outer end portion in the radial direction of the turn portion 127 farthest from the second central axis C2 among the multiple turn portions 12n is connected to the second connection terminal 52. Directions that are represented by the phrase "inner and outer in the radial direction of the second planar coil 12 (the turn portions 12n)" are determined as in the case of the phrase "inner and outer in the radial direction of the first planar coil 11" described above. A method of determining the position of the second central axis C2 is determined in the same manner as in the case of the first central axis C1. For example, the second planar coil 12 according to the present embodiment is formed into the spiral shape by being punched from a copper plate. However, the second planar coil 12 can be formed by etching copper foil into the spiral shape.

According to the present embodiment, the thickness (the thickness of the conductor 12E) of the second planar coil 12 is less than the thickness of the first planar coil 11. The thickness of the second planar coil 12 is 0.15 mm or more and 0.35 mm or less.

The inventor has found the phenomenon in which when the thickness of the second planar coil 12 is 0.15 mm or more and 0.35 mm or less, the performance of the coil component 10 that is used in a predetermined frequency band is considerably improved in the case where the first planar coil 11 and the second planar coil 12 are stacked above the magnetic shield member 20 and the holding body 30. For this reason, the thickness of the second planar coil 12 is 0.15 mm or more and 0.35 mm or less. The predetermined frequency band described above is the frequency band of the alternating current that is caused to flow and is specifically 75 KHz or more and 100 KHz or less, and when the predetermined frequency band is 79 KHz or more and 90 KHz or less, the performance of the coil component 10 is quit considerably improved. The preferable thickness of the second planar coil 12 changes during use in a frequency band outside the range of 75 KHz or more and 100 KHz or less.

The radius (a distance to a portion farthest from the second central axis C2 in the radial direction) of the second planar coil 12 may be 80 mm or more or may be 80 mm or more and 450 mm or less as in the case of the first planar coil 11. The aspect ratio of the second planar coil 12 (the conductor 12E) a sectional shape of which is a rectangular shape may be 2 or more and 12 or less or may be 3 or more and 10 or less as in the case of the first planar coil 11. The line width (the line width of the conductor 12E) of the second planar coil 12, that is, the radial width (the width in the radial direction) of each turn portion 12n may be 2 mm or more and 20 mm or less, or may be 2 mm or more and 16 mm or less, 2 mm or more and 12 mm or less, or 2 mm or more and 8 mm or less. The number of turns of the second planar coil 12 may be 4 or more and 12 or less but is not particularly limited.

The first planar coil 11 and the second planar coil 12 overlap at the interval. The interval may be 0.5 mm or more and 1.5 mm or less. The interval is not particularly limited, but when the interval is too small, the eddy current loss that occurs at the first planar coil 11 and the second planar coil 12 when the electric current is applied tends to increase. When the interval is too large, the coil component 10 fails to be thin.

The inventor has confirmed in experiment and simulation that the phenomenon in which when the thickness of the second planar coil 12 is 0.15 mm or more and 0.35 mm or less, the performance of the coil component 10 that is used in the predetermined frequency band is considerably improved occurs at least with preconditions including the radial widths (2 mm to 20 mm) of the turn portions 11n and 12n and the number of turns (4 to 12) of the first planar coil 11 and the second planar coil 12 described above by way of example. However, the present disclosure is not limited by the conditions described by way of example according to the embodiment. That is, for example, when the thickness of the second planar coil 12 is 0.15 mm or more and 0.35 mm or less, the phenomenon of the considerable improvement in the performance of the coil component 10 that is used in the predetermined frequency band can occur regardless of dimensions and the number of turns.

(Magnetic Shield Member)

The magnetic shield member 20 is provided to decrease magnetic permeability and/or a leaking magnetic field. The magnetic shield member 20 is a sheet member that differs from the first planar coil 11, the second planar coil 12, and the holding body 30. The magnetic shield member 20 that differs from the first planar coil 11, the second planar coil 12, and the holding body 30 means the magnetic shield member 20 that is not formed into a single body together with the first planar coil 11, the second planar coil 12, and the holding body 30. The magnetic shield member 20 and the holding body 30 may be joined to each other with an adhesive layer, for example, interposed therebetween. The magnetic shield member 20 is sized so as to encompass the first planar coil 11 and the second planar coil 12 in plan view. The magnetic shield member 20 overlaps the first planar coil 11, the second planar coil 12, and the holding body 30 and is in direct contact with the holding body 30.

The magnetic shield member 20 according to the present embodiment exerts magnetism and contains a magnetic material or is composed of a magnetic material. As for the coil component 10, a magnetic field is generated when an electric current is applied to the first planar coil 11 and the second planar coil 12. The magnetic field that is generated at the coil component 10 spreads in all directions with respect to the central axes C1 and C2 of the first planar coil 11 and the second planar coil 12. At this time, the magnetic shield member 20 that exerts magnetism can direct lines of magnetic flux that tend to spread toward the central axes C1 and C2. The coil component 10 can be installed on a vehicle, and at this time, if the magnetic field that is generated at the coil component 10 extends through another vehicle component, the vehicle component is adversely affected in some cases. In these cases, the magnetic shield member 20 can decrease the leaking magnetic field that does not contribute to the generation of the electric current.

The magnetic shield member 20 preferably contains a soft magnetic material or a nanocrystal magnetic material. More specifically, the magnetic shield member 20 contains ferrite or preferably contains soft ferrite. According to the present embodiment, the magnetic shield member 20 contains ferrite in a plate form. More specifically, the magnetic shield member 20 includes multiple ferrite plates that are arranged into a sheet.

The relative permeability of the magnetic shield member 20 may be 500 or more or may be 1000 or more. The relative permeability of the magnetic shield member 20 may be 500 or more and 3000 or less or may be 1000 or more and 3000 or less. The relative permeability according to the present specification has a value that is measured at a frequency of 85 KHz and an environmental temperature of 23 degrees.

(Holding Body · Magnetic Member)

As illustrated in Fig. 4 and Fig. 5, the holding body 30 integrally holds the first planar coil 11 and the second planar coil 12. The holding body 30 covers a surface 111A of the first planar coil 11 that faces the second planar coil 12 and a surface 111B opposite the surface 111A and fills the interval between the first planar coil 11 and the second planar coil 12. The holding body 30 fills the interval between the first planar coil 11 and the second planar coil 12 and consequently covers a surface 121B of the second planar coil 12 that faces the first planar coil 11.

The holding body 30 does not cover a surface 121A of the second planar coil 12 opposite the surface 121B that faces the first planar coil 11. The holding body 30 includes the wall portion 34 that protrudes from the second planar coil 12 in the axial direction of the second planar coil 12. The wall portion 34 has a helical shape (a spiral shape) when viewed in the axial direction of the second planar coil 12 and extends along the second planar coil 12.

In Fig. 3, for convenience of description, the holding body 30 is illustrated so as to be divided into the first layer 31, the second layer 32, the third layer 33, and the wall portion 34 as described above. In practice, according to the present embodiment, the holding body 30 includes the first layer 31, the second layer 32, the third layer 33, and the wall portion 34 that have no joints and that are formed into a single body.

The first layer 31, the second layer 32, and the third layer 33 are sized so as to entirely encompass the first planar coil 11 and the second planar coil 12 when viewed in the axial direction of the first planar coil 11 and the second planar coil 12. The first layer 31 is a portion that covers the surface 111B of the first planar coil 11 opposite the surface 111A that faces the second planar coil 12 and side surfaces of the first planar coil 11. The first layer 31 is a portion that is in contact with the magnetic shield member 20. The second layer 32 is a portion that is interposed between the first planar coil 11 and the second planar coil 12. That is, the second layer 32 is a portion that fills the interval between the first planar coil 11 and the second planar coil 12. The third layer 33 is a portion that covers side surfaces of the second planar coil 12. In other words, the third layer 33 is a portion that entirely covers the side surfaces of the second planar coil 12 inward and outward in the radial direction. The surface of the third layer 33 opposite the surface that is connected to the second layer 32 is flush with the surface 121A of the second planar coil 12. The wall portion 34 protrudes from the surface of the third layer 33 that is flush with the surface 121A of the second planar coil 12.

The holding body 30 exerts magnetism as a whole, that is, the first layer 31, the second layer 32, the third layer 33, and the wall portion 34 exert magnetism. As for the holding body 30, the eddy current loss and leaking magnetic flux are decreased due to magnetism, a coupling coefficient is increased, and consequently, coil performance is improved. The relative permeability of the holding body 30 is preferably 2.0 or more and may be 2.0 or more and 10.0 or less. The relative permeability of the holding body 30 is preferably 5.0 or more and may be 5.0 or more and 10.0 or less. The relative permeability of the holding body 30 is not particularly limited, but when the relative permeability is too high, the flexibility and strength of the holding body 30 are undesirably decreased in some cases. Accordingly, the relative permeability of the holding body 30 may be 200 or less.

The holding body 30 includes the wall portion 34 and can consequently effectively improve the coil performance. The height of the wall portion 34 is not particularly limited but may be, for example, 0.5 mm or more or may be 1.0 mm or more. As the height of the wall portion 34 increases, the eddy current loss tends to be further decreased, and the coupling coefficient tends to increase. As the wall portion 34 becomes higher, the wall portion 34 tends to be broken from the root. In view of this, for example, the height of the wall portion 34 may be 10 mm or less. The wall portion 34 may not be provided.

For example, the holding body 30 according to the present embodiment contains multiple or innumerable magnetic material particles composed of resin and a magnetic material. The magnetic material particles are held by the resin that serves as a holding material. The resin that is contained in the holding body 30 has insulation properties. The insulation properties mean that volume resistivity is $10^{10}\ \Omega \cdot$ m or more.

The magnetic material particles may be composed of ferrite, particularly, ferrite of a soft magnetic material, a nanocrystal magnetic material, silicon steel, electromagnetic soft iron, or amorphous metal, or two or more kinds of these. The resin that serves as the holding material may be glass fiber reinforced polyamide. That is, the resin may contain polyamide that is thermoplastic resin (a thermoplastic material) and a material that contains glass fibers. However, the material of the holding body 30 is not particularly limited.

(Connection Terminal)

As illustrated in Fig. 2 and Fig. 3, the first connection terminal 51 is connected to the outer end portion in the radial direction of the turn portion 117 of the first planar coil 11. The second connection terminal 52 is connected to the outer end portion in the radial direction of the turn portion 127 of the second planar coil 12. The first connection terminal 51 and the second connection terminal 52 can be used for, for example, connection to the high-frequency current applying unit 1A or the converter 2A. The first connection terminal 51 and the turn portion 117 may be connected to each other by ultrasonic joining, and the second connection terminal 52 and the turn portion 127 may be connected to each other by ultrasonic joining. However, a connection method is not limited but may be, for example, connection with a conductive adhesive.

<Simulation of Evaluation of Performance of Coil component 10>

The following description contains simulation of calculation of a Q value that is performed in a manner in which multiple values are set to the thickness of the first planar coil 11 and the thickness of the second planar coil 12 of the coil component 10 according to the present embodiment. The simulation is run by using Femtet (registered trademark) made by Murata Software Co., Ltd.

Two patterns (1) and (2) for the conditions of the simulation are as follows.

(1) Multiple values are set to the thickness of the first planar coil 11 and the thickness of the second planar coil 12 of the coil component 10 according to the embodiment described above, and the corresponding Q value is calculated.

(2) The wall portion 34 of the holding body 30 of the coil component 10 according to the embodiment described above is not formed, multiple values are set to the thickness of the first planar coil 11 and the thickness of the second planar coil 12, and the corresponding Q value is calculated.

Common conditions between the patterns (1) and (2) are as follows.

· The high-frequency current to be applied is 40 A, and the frequency is 85 KHz.

· The electrical conductivity of the second planar coil 12 and the first planar coil 11 composed of copper is $6.45 \times 10^7$

[S/m].

· The relative permeability of the magnetic shield member 20 is 3000, and the relative permeability of the holding body 30 is 5.0.

· The widths of the conductor 11E of the first planar coil 11 and the conductor 12E of the second planar coil 12 in the direction of the line IV-IV illustrated in Fig. 2 are 200 mm, and the widths of the conductor 11E of the first planar coil 11 and the conductor 12E of the second planar coil 12 in a direction perpendicular to the line IV-IV are 200 mm.

The result of the simulation (1) described above will be illustrated in Table 1 described later. A vertical column on the left in Table 1 represents the multiple values of the thickness of the first planar coil 11. A horizontal column on the top in Table 1 represents the multiple values of the thickness of the second planar coil 12. In the table, the Q value corresponding to a combination of the thickness of the first planar coil 11 and the thickness of the second planar coil 12 is illustrated. Locations that are marked with "*1" in the vertical column on the left represent that the dimension of the interval between the first planar coil 11 and the second planar coil 12 is 1.0 mm. Locations that are not marked with "*1" represent that the dimension of the interval between the first planar coil 11 and the second planar coil 12 is 0.5 mm.

[Table 1]

| | | Thickness of second planar coil (mm) | | | | | | | | | |
|---|---|---|---|---|---|---|---|---|---|---|---|
| | | 1.0 | 0.5 | 0.4 | 0.3 | 0.275 | 0.25 | 0.2 | 0.15 | 0.125 | 0.1 |
| Thickness of first planar coil (mm) | 1.0 (*1) | | 136.3 | | 201.0 | | 210.6 | | | 161.6 | |
| | 0.5 (*1) | 124.8 | | | | | 204.8 | | | | |
| | 0.5 | | 124.0 | | 185.9 | 192.4 | 196.1 | 192.1 | 160.4 | | 125.4 |
| | 0.4 | | | 150.6 | | | 195.6 | | | | |
| | 0.3 | | | | 180.7 | | 190.7 | | | | |
| | 0.275 | | | | | 184.4 | | | | | |
| | 0.25 | | 126.6 | | 175.2 | | 184.9 | | | | |
| | 0.2 | | | | | | | 171.1 | | | |

The inventor has found the phenomenon in which when the thickness of the second planar coil 12 is 0.15 mm or more and 0.35 mm or less, the performance of the coil component 10 that is used in the predetermined frequency band is considerably improved in the case where the first planar coil 11 and the second planar coil 12 are stacked above the magnetic shield member 20 and the holding body 30 as described above. Specifically, when the thickness of the second planar coil that overlaps the first planar coil 11 and that is used in the predetermined frequency band is set at a value of 0.15 mm or more and 0.35 mm or less, the Q value of the coil component 10 reaches the maximum. Specifically, the predetermined frequency band described above is a frequency band of 75 KHz or more and 100 KHz or less, and the performance of the coil component 10 is improved with certainty in the case where the predetermined frequency band is 79 KHz or more and 90 KHz or less.

As for the result of the simulation illustrated in Table 1, for example, in the case where the thickness of the first planar coil 11 is fixed at 0.5 mm, and the interval between the first planar coil 11 and the second planar coil 12 is fixed at 0.5 mm, the Q value tends to increase as the thickness of the second planar coil 12 decreases from 0.5 mm, and the Q value tends to decrease at 0.15 mm or less. It can be understood that the Q value is the maximum in a condition in which the thickness of the second planar coil 12 is 0.2 mm to 0.275 mm. Fig. 6 is a graph illustrating the result of the simulation in the conditions. In Fig. 6, the Q value relative to the thickness is plotted. Referring to Fig. 6, a setting that maximizes the Q value is found between 0.2 mm and 0.275 mm.

Considering the result in Table 1, a large Q value (about 170 to 210) is obtained in a condition in which the thickness of the second planar coil 12 is 0.2 mm to 0.3 mm regardless of the thickness of the first planar coil 11. Considering the result of the simulation, it is presumed that the preferable performance is obtained even in the case where the thickness of the second planar coil 12 is increased by about 20% from 0.3 mm or is decreased by about 20% from 0.2 mm. Specifically, when the thickness of the second planar coil 12 is 0.15 mm, the Q value is 160.4 and is a high value. It is seen that when the thickness of the second planar coil 12 is excessively decreased, the Q value decreases. In consideration of such a tendency to decrease, manufacturing, and handling, it is presumed that the thickness of the second planar coil 12 is preferably 0.15 mm or more.

The result of the simulation described above corroborates that when the thickness of the second planar coil 12 is 0.15 mm or more and 0.35 mm or less, the performance of the coil component 10 that is used in the predetermined frequency band is considerably improved. The thickness of the second planar coil 12 may be 0.20 mm or more and 0.275 mm or less or may be 0.225 mm or more and 0.275 mm or less. In these cases, the coil performance can be improved with more certainty.

In the case where the "thickness of the first planar coil 11 is 0.5 mm, the thickness of the second planar coil 12 is 0.25 mm, and the interval between the first planar coil 11 and the second planar coil 12 is 1.0 mm", the Q value is 204.8. In the case where the "thickness of the first planar coil 11 is 0.5 mm, the thickness of the second planar coil 12 is 0.25 mm, and the interval between the first planar coil 11 and the second planar coil 12 is 0.5 mm", the Q value is 196.1. It is presumed from the result that as the interval becomes larger, the performance tends to be improved. It is presumed that the phenomenon in which the performance declines when the interval becomes smaller is caused by the increase in the eddy current loss due to the influence of proximity effect. However, when the interval is too large, thinning is impeded. For this reason, for example, the preferable value of the interval may be 0.5 mm or more and 1.5 mm.

In the case where the thickness of the second planar coil 12 is fixed at 0.25 mm, and the thickness of the first planar coil 11 is changed in the simulation illustrated in Table 1, the Q value tends to increase as the thickness of the first planar coil 11 increases. The reason is presumably that as copper thickness (the thickness of the first planar coil 11) increases, resistance decreases, but saturation occurs when the thickness is about 1 mm, and no considerable improvement occurs even when the thickness is increased. In contrast, in a condition in which the thickness of the first planar coil 11 is decreased to about 0.25 mm, a sufficiently large Q value is obtained in comparison with all conditions in the case where the thickness of the first planar coil is increased to about 0.5 mm. It is presumed from this that a large Q value is obtained even when the thickness of the first planar coil 11 is about 0.1 mm. Accordingly, the thickness of the first planar coil 11 may be appropriately set in consideration of economic efficiency and the weight of the coil component but is preferably 0.1 mm or more.

The result of the simulation (2) described above will be illustrated in Table 2 described later. In Table 2, the relationship between the thicknesses and the Q value is illustrated as in Table 1.

[Table 2]

| | | Thickness of second planar coil (mm) | | | | | | | |
|---|---|---|---|---|---|---|---|---|---|
| | | 1.0 | 0.5 | 0.4 | 0.3 | 0.275 | 0.25 | 0.2 | 0.125 |
| Thickness of first planar coil (mm) | 0.5 (*1) | | | | | | 125.7 | | |
| | 0.5 | | 91.7 | | 118.8 | 119.7 | 119.1 | 111.8 | |
| | 0.4 | | | 105.6 | | | 119.4 | | |
| | 0.35 | | | | | | 118.4 | | |
| | 0.3 | | | | 116.8 | | | | |
| | 0.275 | | | | | 116.6 | | | |
| | 0.25 | | 126.6 | | | | 114.5 | | |
| | 0.2 | | | | | | | 104.1 | |

As for the result of the simulation illustrated in Table 2, for example, in the case where the thickness of the first planar coil 11 is fixed at 0.5 mm, and the interval between the first planar coil 11 and the second planar coil 12 is fixed at 0.5 mm, the Q value increases as the thickness of the second planar coil 12 decreases. It can be understood that the Q value is the maximum in a condition in which the thickness of the second planar coil 12 is 0.2 mm to 0.3 mm. A large Q value (115 or more) is obtained in the condition in which the thickness of the second planar coil 12 is 0.2 mm to 0.3 mm regardless of the thickness of the first planar coil 11. Considering the result of the simulation, it is presumed that the preferable performance is obtained even in the case where the thickness of the second planar coil 12 is increased by about 20% from 0.3 mm or is decreased by about 20% from 0.2 mm.

Also, the result of the simulation described above corroborates that when the thickness of the second planar coil 12 is 0.15 mm or more and 0.35 mm or less, the performance of the coil component 10 that is used in the predetermined frequency band is considerably improved.

Table 3 below illustrates the result of the simulation in the cases where the frequency of the electric current to be applied is changed from 85 KHz to 79 KHz and 90 KHz in the conditions of the simulation (1) described above.

## EP 4 542 594 A1

[Table 3]

| | | | Thickness of second planar coil (mm) | | | | | |
|---|---|---|---|---|---|---|---|---|
| | | | 0.5 | 0.35 | 0.25 | 0.2 | 0.15 | 0.1 |
| 79KHz | Thickness of first planar coil (mm) | 0.5 | 122 | 152 | 180 | 173 | 152 | 119 |
| 90KHz | Thickness of first planar coil (mm) | 0.5 | 124 | 155 | 191 | 187 | 167 | 131 |

It can be confirmed from the result of the simulation in Table 3 that when the thickness of the second planar coil 12 is 0.15 mm or more and 0.35 mm or less, the performance of the coil component 10 is considerably improved also in the cases where the frequency of the electric current to be applied is 79 KHz and 90 KHz.

Another simulation will now be described. In the present simulation, multiple values are set to the thickness of the first planar coil 11 and the thickness of the second planar coil 12 of the coil component 10 according to the embodiment described above, and the corresponding Q value is calculated.

In the present simulation, the widths of the conductor 11E of the first planar coil 11 and the conductor 12E of the second planar coil 12 in the direction of the line IV-IV illustrated in Fig. 2 are 326 mm, and the widths of the conductor 11E of the first planar coil 11 and the conductor 12E of the second planar coil 12 in the direction perpendicular to the line IV-IV are 326 mm. Other conditions are the same as those in the simulation described above. The Q value in the cases where the thickness of the first planar coil 11 is fixed at 0.5 mm, and the thickness of the second planar coil 12 is 0.5 mm, 0.35 mm, 0.25 mm, and 0.2 mm is simulated. The result of the simulation is illustrated in Table 4 below.

[Table 4]

| | | Thickness of second planar coil (mm) | | | |
|---|---|---|---|---|---|
| | | 0.5 | 0.35 | 0.25 | 0.2 |
| Thickness of first planar coil (mm) | 0.5 | 170 | 212 | 230 | 221 |

It is presumed and confirmed also from the result of the simulation illustrated in Table 4 that when the thickness of the second planar coil 12 is 0.15 mm or more and 0.35 mm or less, the performance of the coil component 10 can be considerably improved.

Another simulation will now be described. In the present simulation, the simulation is run in two patterns (1) and (2) below as in the simulation the result of which is illustrated in Table 1 and Table 2.

(1) Multiple values are set to the thickness of the first planar coil 11 and the thickness of the second planar coil 12 of the coil component 10 according to embodiment described above, and the corresponding Q value is calculated.

(2) The wall portion 34 of the holding body 30 of the coil component 10 according to embodiment described above is not formed, multiple values are set to the thickness of the first planar coil 11 and the thickness of the second planar coil 12, and the corresponding Q value is calculated.

In the present simulation, however, the widths of the conductor 11E of the first planar coil 11 and the conductor 12E of the second planar coil 12 in the direction of the line IV-IV illustrated in Fig. 2 are 470 mm, and the widths of the conductor 11E of the first planar coil 11 and the conductor 12E of the second planar coil 12 in the direction perpendicular to the line IV-IV are 570 mm. The other specific conditions are the same as those in the simulation described above.

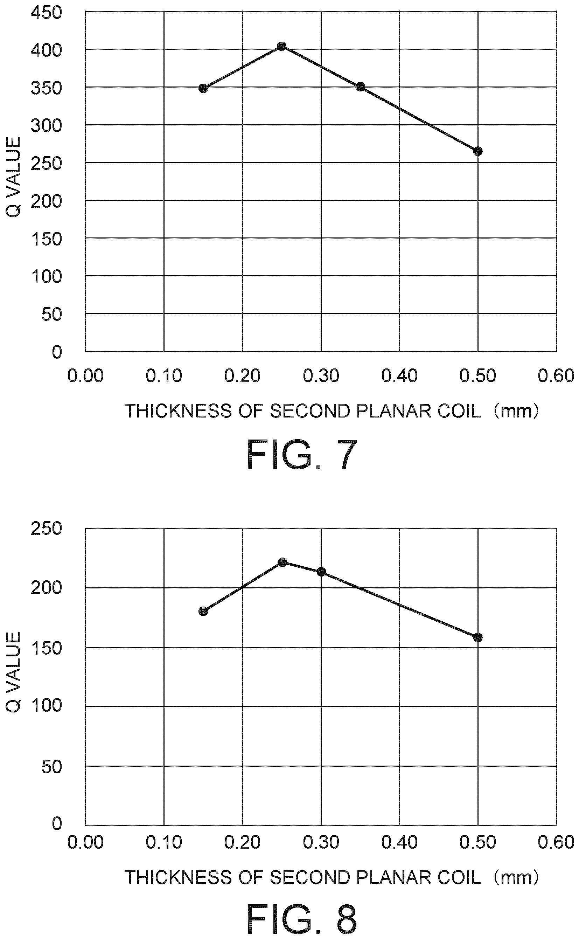

As for the pattern (1), the Q value in the cases where the thickness of the first planar coil 11 is fixed at 0.5 mm, and the thickness of the second planar coil 12 is 0.5 mm, 0.35 mm, 0.25 mm, and 0.15 mm is simulated. The result of the simulation for the pattern (1) is illustrated in Table 5 described later. As for the pattern (2), the Q value in the cases where the thickness of the first planar coil 11 is fixed at 0.5 mm, and the thickness of the second planar coil 12 is 0.5 mm, 0.30 mm, 0.25 mm, and 0.15 mm is simulated. The result of the simulation for pattern (2) is illustrated in Table 6 described later. The result of the simulation for the pattern (1) is illustrated in Fig. 7, and the result of the simulation for the pattern (2) is illustrated in Fig. 8.

[Table 5]

| | | Thickness of second planar coil (mm) | | | |
|---|---|---|---|---|---|
| | | 0.5 | 0.35 | 0.25 | 0.15 |
| Thickness of first planar coil (mm) | 0.5 | 265 | 350 | 403 | 347 |

[Table 6]

| | | Thickness of second planar coil (mm) | | | |
|---|---|---|---|---|---|
| | | 0.5 | 0.3 | 0.25 | 0.15 |
| Thickness of first planar coil (mm) | 0.5 | 158 | 213 | 221 | 180 |

It is presumed and confirmed also from the result of the simulation described above that when the thickness of the second planar coil 12 is 0.15 mm or more and 0.35 mm or less, the performance of the coil component 10 can be considerably improved. As illustrated in Fig. 7 and Fig. 8, it is presumed that when the thickness of the second planar coil 12 is 0.2 mm or more and 0.3 mm or less, the Q value is the maximum.

<Use of Coil Component>

The coil component 10 according to the present embodiment can be used as the power transmission coil of the power transmitter 1 of the wireless power transmission system S described above and can be used as the power reception coil of the power receiver 2.

In the case where the coil component 10 is used as the power transmission coil, the first connection terminal 51 and the second connection terminal 52 are connected to the high-frequency current applying unit 1A illustrated in Fig. 1 or an alternating-current power source. After the high-frequency current is applied to the coil component 10, the electric current flows from the first connection terminal 51 to the first planar coil 11 and the second planar coil 12 and can subsequently flow from the second connection terminal 52 to the high-frequency current applying unit 1A or the alternating-current power source. The electric current flows from the second connection terminal 52 to the second planar coil 12 and the first planar coil 11 and can subsequently flow from the first connection terminal 51 to the high-frequency current applying unit 1A or the alternating-current power source. This enables a magnetic field that includes a line of magnetic force parallel with the central axis of the planar coil 11 to be generated.

In the case where the coil component 10 is used as the power reception coil, the magnetic field that includes the line of magnetic force is received so as to pass inside the first planar coil 11 and the second planar coil 12, and consequently, the high-frequency current can be generated at the first planar coil 11 and the second planar coil 12. The high-frequency current can be applied from the first connection terminal 51 or the second connection terminal 52 to an external device.

The coil component 10 can be used for a transformer or an antenna. For example, in the case where the coil component 10 functions as a primary coil of the transformer, the first connection terminal 51 and the second connection terminal 52 are connected to the alternating-current power source. The supply of the high-frequency current enables magnetic flux to be applied from the center of each planar coil to an iron core.

The coil component 10 according to the present embodiment described above includes the first planar coil 11, the second planar coil 12 that is stacked with the first planar coil 11, the holding body 30 that exerts magnetism and that includes the portion that covers the surface of the first planar coil 11 opposite the surface that faces the second planar coil 12, and the magnetic shield member 20 that faces the surface of the covering portion of the holding body 30 opposite the surface that faces the first planar coil 11. The first planar coil 11 and the second planar coil 12 are connected to each other in series, and the thickness of the second planar coil 12 is 0.15 mm or more and 0.35 mm or less.

The coil component 10 according to the present embodiment enables the size and the weight to be inhibited from increasing and enables the performance to be improved. In typical consideration, it is presumed that as the thickness of a coil increases, the inductance of the coil increases, and the coil performance such as the Q value becomes better. However, the inventor has found from diligent research that a structure in which planar coils are connected to each other in series and overlap a member that exerts magnetism does not necessarily have such a tendency. The inventor has found that when the thickness of the second planar coil 12 is 0.15 mm or more and 0.35 mm or less, the Q value is the maximum regardless of the thickness of the first planar coil 11 in the case where the alternating current or the alternating magnetic field in the predetermined frequency band is applied in a structure in which the first planar coil 11 and the second planar coil 12 are stacked in this order above the magnetic shield member 20 and the holding body 30. It has been revealed from the findings that the use of the second planar coil 12 the thickness of which is 0.25 mm enables the performance of the coil component 10 to be improved, for example, more than in the case of the use of the second planar coil 12 the thickness of which is 0.5 mm.

That is, as for the coil component 10 based on the findings, the thickness of the second planar coil 12 is set at 0.15 mm or more and 0.35 mm or less, and consequently, the thickness of the second planar coil 12 to be decreased. The performance of the coil component 10 that is used in the predetermined frequency band can be improved as much as possible. This enables the entire size and weight of the coil component 10 to be inhibited from increasing and enables the performance of the coil component 10 to be improved. It is difficult to predict, from the technical common sense, the phenomenon in which when the thickness of the second planar coil 12 is 0.15 mm or more and 0.35 mm or less, the Q value is the maximum regardless of the thickness of the first planar coil 11 in the case where the alternating current or the alternating magnetic field in the predetermined frequency band is applied in the structure in which the first planar coil 11 and the second planar coil 12 are stacked in this order above the magnetic shield member 20 and the holding body 30. It is certain that the above-described coil component that is invented based on the phenomenon exerts a remarkable effect that greatly contributes to the improvement in the performance of the coil component.

Specifically, the inventor has found that when the thickness of the second planar coil 12 is 0.15 mm or more and 0.35 mm or less, the Q value is the maximum regardless of the thickness of the first planar coil 11 in the case where the alternating current at 75 KHz or more and 100 KHz or less, particularly, at 79 KHz or more and 90 KHz or less is applied or the alternating magnetic field at 75 KHz or more and 100 KHz or less, particularly, at 79 KHz or more and 90 KHz or less is applied to the first planar coil 11 and the second planar coil 12. That is, a structure in which the thickness of the second planar coil 12 is set at 0.15 mm or more and 0.35 mm or less considerably improves the performance in the case where the alternating current at 75 KHz or more and 100 KHz or less, particularly, at 79 KHz or more and 90 KHz or less is applied, or the alternating magnetic field at 75 KHz or more and 100 KHz or less, particularly, at 79 KHz or more and 90 KHz or less is applied as the alternating current or the alternating magnetic field in the predetermined frequency band.

In the case where the thickness of the second planar coil 12 is set at 0.15 mm or more and 0.35 mm or less as described above, the thickness of the first planar coil 11 is preferably 0.1 mm or more and 1.0 mm or less. With this structure, for example, the performance required for relatively high-power non-contact power transmission is sufficient, and the coil component 10 can be very thin and light. Accordingly, the coil component 10 that is highly practical can be provided.

The interval between the first planar coil 11 and the second planar coil 12 may be 0.5 mm or more and 1.5 mm or less. With this structure, thinning is not impeded, and the performance of the coil component 10 can be effectively improved.

According to the present embodiment, the holding body 30 contains resin and magnetic material particles that are held by the resin. In this case, bond strength between the resin and the first planar coil 11 and between the resin and the second planar coil 12 can be improved, and accordingly, the first planar coil 11 and the second planar coil 12 can be stably formed into a single body.

The relative permeability of the holding body 30 may be 5.0 or more. In this case, the magnetic permeability of the holding body 30 enables the performance of the coil component to be improved. The relative permeability of the holding body 30 may be 10.0 or less. In this case, the strength of the holding body 30 is appropriately ensured, and the strength of coupling between the holding body 30 and the planar coils 11 and 12 can be increased.

The holding body 30 according to the present embodiment includes the wall portion 34 that protrudes from the second planar coil 12. With this structure, the transmission efficiency of magnetic flux that exits from the coil component 10 or that enters from another coil component can be effectively improved.

According to the present embodiment, one of the multiple turn portions 11n of the first planar coil 11 and one of the multiple turn portions 12n of the second planar coil 12 partly overlap in the axial direction of the first planar coil 11. The portion of the turn portion 11n of the first planar coil 11 and the portion of the turn portion 12n of the second planar coil 12 that overlap in the axial direction of the first planar coil 11 are parallel with each other. With this structure, the performance of the coil component 10 can be effectively improved. It is presumed that with this structure, the coil performance is improved because the eddy current loss that can occur between the first planar coil 11 and the second planar coil 12 is decreased.

The inventor has found the phenomenon in which when the thickness of the second planar coil 12 is 0.15 mm or more and 0.35 mm or less, the Q value is the maximum, for example, relates to the epidermal thickness of the coil and found that a dimensional condition in which the Q value is the maximum changes depending on the epidermal thickness of the coil. Epidermal thickness $\delta$ is defined as an expression below.

$$\delta = 1 \,/\, \sqrt{\pi} \cdot f \cdot \mu r \cdot \mu 0 \cdot \sigma,$$

where f is the frequency, $\mu r$ is the magnetic permeability of the coil, $\mu 0$ is the magnetic permeability in free space, and $\sigma$ is the conductivity of the coil.

The epidermal thickness $\delta$ changes depending on the frequency of the alternating current to be applied. In the case where the frequency of the alternating current is 75 KHz or more and 100 KHz or less, the epidermal thickness $\delta$ is

about 0.19 mm to 0.21 mm. The inventor presumes that in the case where the epidermal thickness δ is 0.19 mm to 0.21 mm, and the thickness of the second planar coil 12 matches or is close to this value, the Q value is considerably improved.

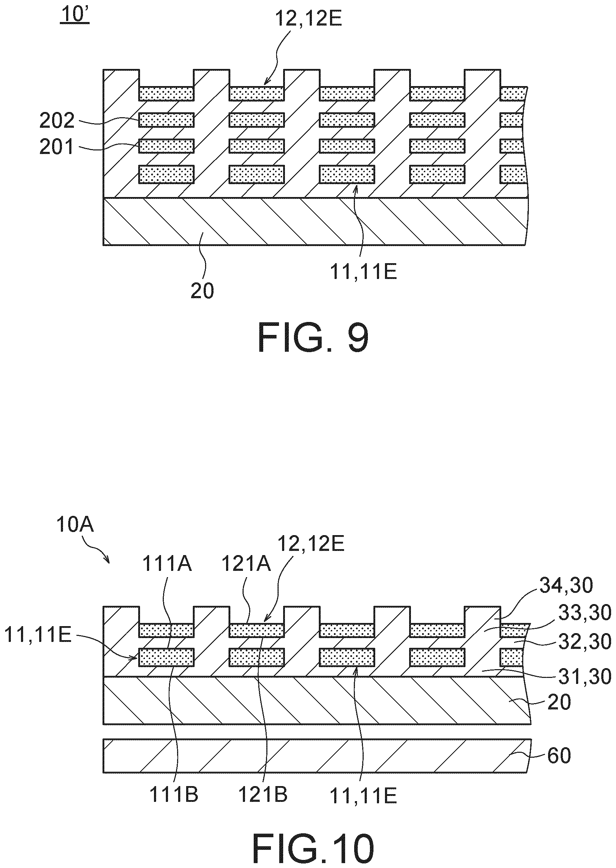

A coil component 10' according to another embodiment will now be described with reference to Fig. 9. Fig. 9 is a sectional view of the coil component 10'. Components like to those according to the embodiment described above are designated by like reference signs, and the description thereof is omitted.

(Another Embodiment 1)

The coil component 10' further includes an even number of other planar coils 201 and 202 that are disposed between the first planar coil 11 and the second planar coil 12. According to the present embodiment, the even number of the other planar coils 201 and 202 include a third planar coil 201 and a fourth planar coil 202. However, for example, the even number of the other planar coils may include four or six planar coils.

The first planar coil 11, the other planar coils 201 and 202, and the second planar coil 12 are connected to each other in series. As for the other planar coils 201 and 202, of the third planar coil 201 that is connected to the first planar coil 11 and the fourth planar coil 202 different therefrom, at least the thickness of the fourth planar coil 202 is 0.15 mm or more and 0.35 mm or less. According to the present embodiment, the thickness of the third planar coil 201 is 0.15 mm or more and 0.35 mm or less. The thickness of the second planar coil 12 and the thickness of the third planar coil 201 are equal to the thickness of the fourth planar coil 202. The size of the first planar coil 11 is in the same range as that according to the embodiment described above, and for example, the thickness, for example, may be 0.2 mm or more and 1.0 mm or less. In the case where the thickness of the third planar coil 201 is outside the range of 0.15 mm or more and 0.35 mm or less, the thickness of the third planar coil 201 may be 1.0 mm or less or may be equal to the thickness of the first planar coil 11.

Also, the coil component 10' according to the present embodiment enables the size and the weight to be inhibited from increasing and enables the performance to be improved. More specifically, in the case where the alternating current at 75 KHz or more and 100 KHz or less, particularly, at 79 KHz or more and 90 KHz or less is applied or the alternating magnetic field at 75 KHz or more and 100 KHz or less, particularly, at 79 KHz or more and 90 KHz or less is applied to the first planar coil 11, the other planar coils 201 and 202, and the second planar coil 12, the performance of the coil component 10' can be considerably improved.

As for the coil component 10', when the thickness of the first planar coil 11 is 0.5 mm, the thickness of the third planar coil 201 is 0.25 mm, the thickness of the fourth planar coil 202 is 0.25 mm, and the thickness of the second planar coil 12 is 0.25 mm, the result of simulation of the Q value in the same conditions as those in the simulation illustrated in Table 1 is that the Q value is 227.

When the thickness of the first planar coil 11 is 0.5 mm, the thickness of the third planar coil 201 is 0.50 mm, the thickness of the fourth planar coil 202 is 0.25 mm, and the thickness of the second planar coil 12 is 0.25 mm, the result of simulation of the Q value is that the Q value is 202.

When the thicknesses of the four planar coils are 0.5 mm, the result of simulation of the Q value is that the Q value is 101.

As for the result of the simulation described above, it can be confirmed that when at least the thickness of the planar coil nearest to the magnetic material (20, 30) other than the first planar coil 11 is 0.25 mm, the coil performance can be improved in the case where the even number of the planar coils are stacked, and the electric current to be applied is at 75 KHz or more and 100 KHz or less, particularly, at 79 KHz or more and 90 KHz or less. The result of the simulation is omitted, but the inventors have confirmed that the structure according to the present embodiment enables the coil performance to be improved even when the thickness of the planar coil other than the first planar coil 11 is not 0.25 mm in a range of 0.15 mm or more and 0.35 mm or less.

Other embodiments will now be described. According to the embodiments described below, components like to those according to the embodiments described above are designated by like reference signs, and the description thereof is omitted.

(Another Embodiment 2)

A coil component 10A according to the other embodiment 2 illustrated in Fig. 10 further includes a second magnetic shield member 60 in addition to the first planar coil 11, the second planar coil 12, the magnetic shield member 20, and holding body 30 illustrated in Fig. 2 to Fig. 5. In some cases below, for convenience of description, the magnetic shield member 20 is referred to as the first magnetic shield member 20.

The second magnetic shield member 60 faces a surface of the first magnetic shield member 20 opposite a surface that faces the first layer 31 (the portion that covers the surface 111B of the first planar coil 11) of the holding body 30 (the magnetic member). The second magnetic shield member 60 has a plate shape, but the shape is not particularly limited. The second magnetic shield member 60 faces the first magnetic shield member 20 at an interval in a direction in which the first planar coil 11 and the second planar coil 12 overlap. The material of the first magnetic shield member 20 and the material of the second magnetic shield member 60 may differ from each other.

In this example, relationships between the first magnetic shield member 20 and the second magnetic shield member 60 are as follows. The volume resistivity of the first magnetic shield member 20 is higher than the volume resistivity of the second magnetic shield member 60. The volume resistivity of the first magnetic shield member 20 may be $10^2$ times or more, may be $10^3$ times or more, may be $10^4$ times or more, may be $10^5$ times or more, or may be $10^6$ times or more the volume resistivity of the second magnetic shield member 60. The relative permeability of the first magnetic shield member 20 is higher than the relative permeability of the second magnetic shield member 60. The relative permeability of the first magnetic shield member 20 may be 100 times or more, may be 200 times or more, may be 500 times or more, may be 1000 times or more, or may be 2000 times or more the relative permeability of the second magnetic shield member 60.

The second magnetic shield member 60 faces the first magnetic shield member 20 at the interval but may be in direct contact with the first magnetic shield member 20, and a spacer may be provided between the second magnetic shield member 60 and the first magnetic shield member 20. The second magnetic shield member 60 is composed of a metal material and is conductive. Specifically, in this example, the second magnetic shield member 60 contains aluminum, specifically, is composed of aluminum. The second magnetic shield member 60 may be composed of, for example, an aluminum alloy, copper, or stainless steel.

Also, as for the coil component 10A illustrated in Fig. 10, the thickness of the second planar coil 12 is 0.15 mm or more and 0.35 mm or less. Consequently, the coil component 10A enables the performance to be quit considerably improved in the case where the alternating current at 75 KHz or more and 100 KHz or less, at 79 KHz or more and 90 KHz or less, or at 85 KHz is applied, or the alternating magnetic field at 75 KHz or more and 100 KHz or less, at 79 KHz or more and 90 KHz or less, or at 85 KHz is applied. That is, in an example in which the coil component 10A is specifically used, the coil component 10A is also used for the power transmission system S illustrated in Fig. 1 and is configured such that the alternating current at 75 KHz or more and 100 KHz or less or at 79 KHz or more and 90 KHz or less is applied, or the alternating magnetic field at 75 KHz or more and 100 KHz or less or at 79 KHz or more and 90 KHz or less is applied as in the coil component 10 described above. This enables the coil component 10A to fulfill a useful function.

For example, the thickness (the thickness of the conductor 11E) of the first planar coil 11 may be 0.1 mm or more and 1.0 mm or less. The first planar coil 11, the second planar coil 12, the holding body 30, and the magnetic shield member 20 can be formed in the same shapes and dimensional conditions as those of the components of the coil component 10 described with reference to, for example, Fig. 2 to Fig. 5. For example, the holding body 30 may not include the wall portion 34.

The result of simulation in which the performance of the coil component 10A is evaluated will now be described with reference to Table 7 described later. In Table 7, the result of evaluation of the coil component 10A and comparative examples 1-A and 1-B is illustrated. As for the coil component 10A that is simulated, the thickness of the first planar coil 11 is set at 0.5 mm, and the thickness of the second planar coil 12 is set at 0.25 mm. The comparative example 1-A is a coil component that is configured such that the thickness of the first planar coil 11 and the thickness of the second planar coil 12 are set at 0.5 mm, and the other structures are the same as those of the coil component 10A. The comparative example 1-B is a coil component that is configured such that the thickness of the first planar coil 11 is set at 0.25 mm, the thickness of the second planar coil 12 is set at 0.5 mm, and the other structures are the same as those of the coil component 10A. As for the coil component 10A, the comparative example 1-A, and the comparative example 1-B, the first planar coil 11 is composed of aluminum, and the second planar coil 12 is composed of copper. The comparative examples described herein by way of example are not necessarily excluded from the present disclosure (the present invention) but are included in the present disclosure (the present invention) depending on the condition of the frequency to be used.

[Table 7]

| | Coil thickness (mm) | Q value | Loss (W) | | | Resistance (@85kHz(Ω)) |
|---|---|---|---|---|---|---|
| | | | Magnetic shield | Coil | Total | |
| Present disclosure | 050/025 | 183 | 23 | 99 | 123 | 0.098 |
| Comparative example 1-A | 050/050 | 130 | 23 | 149 | 173 | 0.138 |
| Comparative example 1-B | 025/050 | 120 | 23 | 165 | 188 | 0.150 |

"Present disclosure" in the vertical column on the left in Table 7 represents the coil component 10A, and right-hand columns represent the condition of coil thickness in the simulation (050/025, that is, 0.5 mm/0.25 mm), the Q value that is calculated in the simulation, the loss, and the resistance of the coil component 10A in this order. Similarly, the right-hand columns on the right of "Comparative example 1-A" and "Comparative example 1-B" in the vertical column on the left in Table 7 represent the condition of the coil thickness in the simulation, the Q value that is calculated in the simulation, the loss, and the resistance regarding the comparative examples in this order. The loss at a magnetic shield in the table means the loss at the second magnetic shield member 60.

As clear from Table 7, the Q value of the coil component 10A is 183 and is larger than the Q value (130) of the comparative example 1-A and the Q value (120) of the comparative example 1-B. The loss (the loss at the magnetic shield member 60 and the loss at the coils 11 and 12) at the coil component 10A is less than the loss at the comparative example 1-A and the loss at the comparative example 1-B. The frequency of the alternating current to be applied to each coil component is set at 85 KHz, the simulation is run, and consequently, the alternating-current resistance of the coil component 10A is less than that of the comparative example 1-A and the comparative example 1-B.

It can be confirmed from the result of the simulation illustrated in Table 7 that the performance of the coil component 10A is excellent. In particular, as for the coil component 10A, the amount of the use of a coil material is smaller than that of the comparative example 1-A, and the performance that is more excellent than that of the comparative example 1-A is maintained. This point corroborates the usefulness of the present disclosure. The coil component 10A and the comparative example 1-B use two coils in the same conditions but have a significant difference in performance. Ingenuity of a coil position to adjust the thickness to 0.15 mm or more and 0.35 mm or less is one of features of the present disclosure.

(Another Embodiment 3)

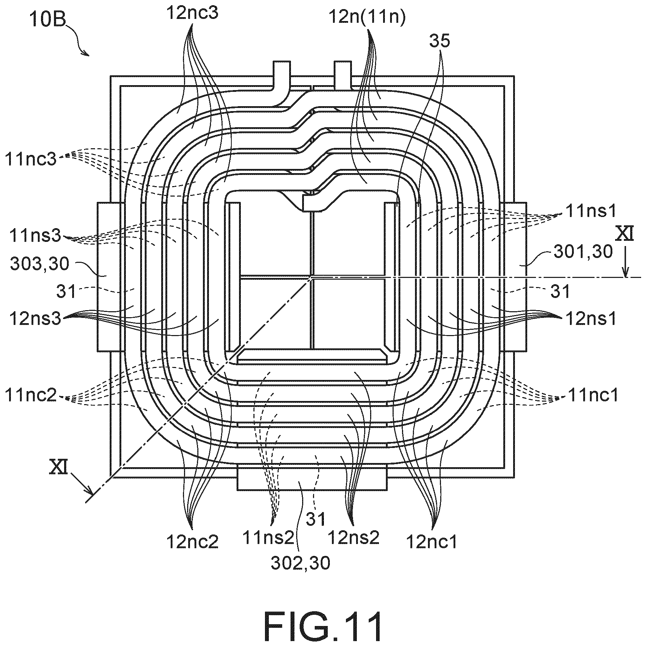

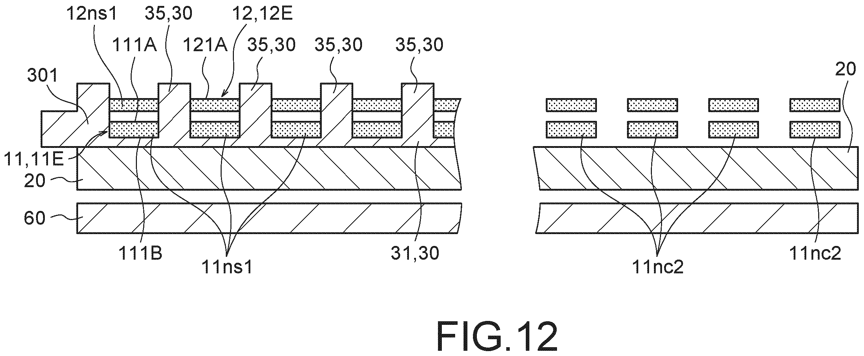

According to the embodiment described above, the first layer 31 (the portion that covers the surface 111B of the first planar coil 11) of the holding body 30 entirely covers the surface 111B of the first planar coil 11. In contrast, as for a coil component 10B according to the other embodiment 3 illustrated in Fig. 11 and Fig. 12, the first layer 31 of the holding body 30 partly covers the surface 111B of the first planar coil 11 opposite the surface that faces the second planar coil 12. According to the embodiment 3 described herein, the first layer 31 includes only portions that face the surface 111B unlike the structure described with reference to Fig. 2 to Fig. 5.

In this example, as illustrated by using dashed lines in Fig. 11, the turn portions 11n of the first planar coil 11 include first straight portions 11ns1 that linearly extend, first corner portions 11nc1 that are connected to the first straight portions 11ns1 and that curve, second straight portions 11ns2 that are connected to the first corner portions 11nc1 and that linearly extend, second corner portions 11nc2 that are connected to the second straight portions 11ns2 and that curve, third straight portions 11ns3 that are connected to the second corner portions 11nc2 and that linearly extend, third corner portions 11nc3 that are connected to the third straight portions 11ns3 and that curve, and another portion and form a turn shape. Similarly, the turn portions 12n of the second planar coil 12 include first straight portions 12ns1, first corner portions 12nc1, second straight portions 12ns2, second corner portions 12nc2, third straight portions 12ns3, third corner portions 12nc3, and another portion and form a turn shape, although a detailed description is omitted.

Specifically, the first layer 31 of the holding body 30 covers the first straight portions 11ns1, the second straight portions 11ns2, and the third straight portions 11ns3. The first layer 31 of the holding body 30 does not cover the first corner portions 11nc1, the second corner portions 11nc2, or the third corner portions 11nc3. In other words, the holding body 30 does not cover the first corner portions 11nc1, the second corner portions 11nc2, or the third corner portions 11nc3 in the direction in which the first planar coil 11 and the second planar coil 12 overlap.

In this example, the holding body 30 includes multiple, three in this example, pieces 301 to 303 that are separated from each other. Specifically, the holding body 30 includes the first piece 301, the second piece 302, and the third piece 303. The pieces 301 to 301 include the respective first layers 31, and the first layers 31 cover the first planar coil 11. Specifically, the first layer 31 of the first piece 301 covers the first straight portions 11ns1. The first layer 31 of the second piece 302 covers the second straight portions 11ns2. The first layer 31 of the third piece 303 covers the third straight portions 11ns3.

The pieces 301 to 301 include the first layers 31 and multiple guide holding plate portions 35 that extend upward from the first layers 31. The guide holding plate portions 35 are composed of the same material as the first layers 31 and exert magnetism. The multiple guide holding plate portions 35 linearly extend in parallel. The pieces 301 to 303 have spaces that contain the straight portions (11ns1, 11ns2, 11ns3, 12ns1, 12ns2, and 12ns3) between the guide holding plate portions 35 adjacent to each other. The holding body 30 holds the first planar coil 11 and the second planar coil 12 between the guide holding plate portions 35 adjacent to each other with the straight portions (11ns1, 11ns2, and 11ns3) of the first planar coil 11 and the straight portions (12ns1, 12ns2, and 12ns3) of the second planar coil 12 overlapping in this order. In this example, the straight portions (11ns1, 11ns2, and 11ns3) of the first planar coil 11 are disposed between the guide holding plate portions 35 adjacent to each other, and air layers are formed between the straight portions (12ns1, 12ns2, and 12ns3) of the second planar coil 12. For example, insulating resin may be filled or a spacer composed of the same material as the holding body 30 may be filled between the straight portions (11ns1, 11ns2, and 11ns3) of the first planar coil 11 and the straight portions (12ns1, 12ns2, and 12ns3) of the second planar coil 12. As illustrated in Fig. 12, portions of the first planar coil 11 that do not overlap the holding body 30 overlap the magnetic shield member 20 at an interval (an air layer) between the portions and the magnetic shield member 20.

Also, as for the coil component 10B illustrated in Fig. 11, the thickness of the second planar coil 12 is 0.15 mm or more and 0.35 mm or less. Consequently, the coil component 10B enables the performance to be quit considerably improved in the case where the alternating current at 75 KHz or more and 100 KHz or less, at 79 KHz or more and 90 KHz or less, or at 85 KHz is applied, or the alternating magnetic field at 75 KHz or more and 100 KHz or less, at 79 KHz or more and 90 KHz or less, or at 85 KHz is applied. That is, in an example in which the coil component 10B is specifically used, the coil component 10B is also used for the power transmission system S illustrated in Fig. 1 and is configured such that the alternating current at 75 KHz or more and 100 KHz or less or at 79 KHz or more and 90 KHz or less is applied, or the alternating magnetic field at 75 KHz or more and 100 KHz or less or at 79 KHz or more and 90 KHz or less is applied as in the coil component 10 described above. This enables the coil component 10B to fulfill a useful function.

For example, the thickness (the thickness of the conductor 11E) of the first planar coil 11 may be 0.1 mm or more and 1.0 mm or less. The first planar coil 11, the second planar coil 12, the holding body 30, and the magnetic shield member 20 can be formed in the same shapes and dimensional conditions as those of the components of the coil component 10 described with reference to, for example, Fig. 2 to Fig. 5. The coil component 10 and the coil component 10B differ from each other in shapes in the details of the first planar coil 11 and the second planar coil 12 but do not essentially differ from each other. Specifically, in this example, the direction in which the first planar coil 11 turns and the direction in which the second planar coil 12 turns are opposite those in the case of the coil component 10 described with reference to, for example, Fig. 2 to Fig. 5. The number of turns of the first planar coil 11 and the number of turns of the second planar coil 12 differ from those in the case of the coil component 10 described with reference to, for example, Fig. 2 to Fig. 5. The structures of the details are not particularly limited.

The result of simulation in which the performance of the coil component 10B is evaluated will now be described with reference to Table 8 described later. In Table 8, the result of evaluation of the coil component 10B and comparative examples 2-A and 2-B is illustrated. As for the coil component 10B that is simulated, the thickness of the first planar coil 11 is set at 0.5 mm, and the thickness of the second planar coil 12 is set at 0.25 mm. The comparative example 2-A is a coil component that is configured such that the thickness of the first planar coil 11 and the thickness of the second planar coil 12 are set at 0.5 mm, and the other structures are the same as those of the coil component 10B. The comparative example 2-B is a coil component that is configured such that the thickness of the first planar coil 11 is set at 0.25 mm, the thickness of the second planar coil 12 is set at 0.5 mm, and the other structures are the same as those of the coil component 10B. As for the coil component 10B, the comparative example 2-A, and the comparative example 2-B, the first planar coil 11 is composed of aluminum, and the second planar coil 12 is composed of copper. The comparative examples described herein by way of example are not necessarily excluded from the present disclosure (the present invention) but are included in the present disclosure (the present invention) depending on the condition of the frequency to be used.

[Table 8]

| | Coil thickness (mm) | Q value | Loss (W) | | | Resistance (@85kHz(Ω)) |
|---|---|---|---|---|---|---|
| | | | Magnetic shield | Coil | Total | |
| Present disclosure | 050/025 | 95 | 20 | 184 | 204 | 0.163 |
| Comparative example 2-A | 050/050 | 84 | 20 | 208 | 228 | 0.182 |
| Comparative example 2-B | 025/050 | 78 | 20 | 228 | 248 | 0.198 |

"Present disclosure" in the vertical column on the left in Table 8 represents the coil component 10B, and right-hand columns represent the condition of the coil thickness in the simulation, the Q value that is calculated in the simulation, the loss, and the resistance of the coil component 10B in this order. Similarly, the right-hand columns on the right of "Comparative example 2-A" and "Comparative example 2-B" in the vertical column on the left in Table 8 represent the condition of the coil thickness in the simulation, the Q value that is calculated in the simulation, the loss, and the resistance regarding the comparative examples in this order.

As clear from Table 8, the Q value of the coil component 10B is 95 and is larger than the Q value (84) of the comparative example 2-A and the Q value (78) of the comparative example 2-B. The loss (the loss at the magnetic shield member 60 and the loss at the coils 11 and 12) at the coil component 10B is less than the loss at the comparative example 2-A and the loss at the comparative example 2-B. The frequency of the alternating current to be applied to each coil component is set at 85 KHz, the simulation is run, and consequently, the alternating-current resistance of the coil component 10B is less than that of the comparative example 2-A and the comparative example 2-B.

It can be confirmed from the result of the simulation illustrated in Table 8 that the performance of the coil component 10B is excellent. In particular, as for the coil component 10B, the amount of the use of the coil material is smaller than that of the comparative example 2-A, and the performance that is more excellent than that of the comparative example 2-A is maintained. This point corroborates the usefulness of the present disclosure.

(Another Embodiment 4)

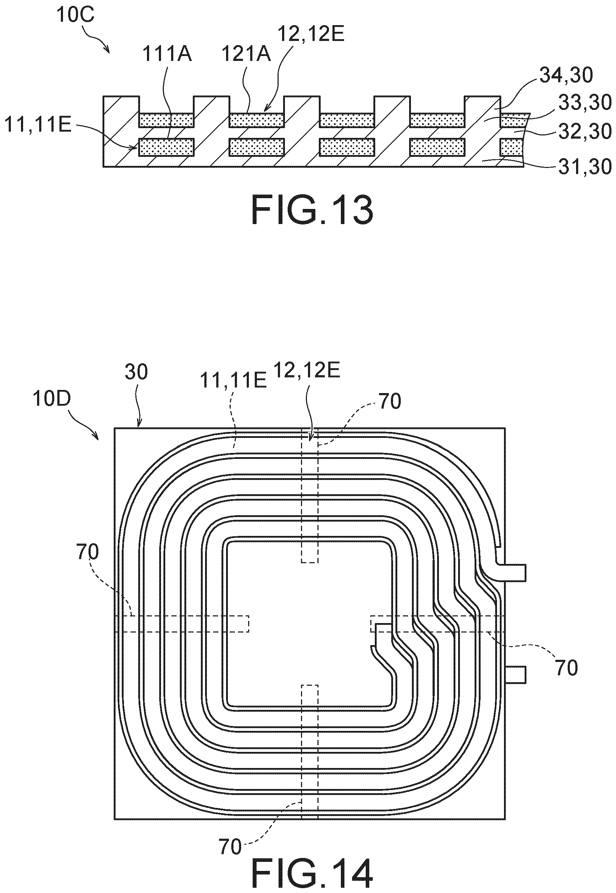

A coil component 10C according to another embodiment 4 illustrated in Fig. 13 includes the first planar coil 11, the second planar coil 12, and the holding body 30 but does not include the magnetic shield member 20. This structure is useful to use for the power transmitter. The first planar coil 11, the second planar coil 12, and the holding body 30 have the same structure as the structure illustrated with reference to, for example, Fig. 2 to Fig. 5.

Also, as for the coil component 10C illustrated in Fig. 13, the thickness of the second planar coil 12 is 0.15 mm or more and 0.35 mm or less. Consequently, the coil component 10C enables the performance to be quit considerably improved in the case where the alternating current at 75 KHz or more and 100 KHz or less, at 79 KHz or more and 90 KHz or less, or at 85 KHz is applied, or the alternating magnetic field at 75 KHz or more and 100 KHz or less, at 79 KHz or more and 90 KHz or less, or at 85 KHz is applied. That is, in an example in which the coil component 10C is specifically used, the coil component 10C is also used for the power transmission system S illustrated in Fig. 1 and is configured such that the alternating current at 75 KHz or more and 100 KHz or less or at 79 KHz or more and 90 KHz or less is applied, or the alternating magnetic field at 75 KHz or more and 100 KHz or less or at 79 KHz or more and 90 KHz or less is applied as in the coil component 10 described above. This enables the coil component 10C to fulfill a useful function.

For example, the thickness (the thickness of the conductor 11E) of the first planar coil 11 may be 0.1 mm or more and 1.0 mm or less. The first planar coil 11, the second planar coil 12, and the holding body 30 can be formed in the same shapes and dimensional conditions as those of the components of the coil component 10 described with reference to, for example, Fig. 2 to Fig. 5. The coil component 10 and the coil component 10C may have a difference between shapes in the details of the first planar coil 11 and the second planar coil 12.

The result of simulation in which the performance of the coil component 10C is evaluated will now be described with reference to Table 9 described later. In Table 9, the result of evaluation of the coil component 10C and comparative examples 3-A and 3-B is illustrated. As for the coil component 10C that is simulated, the thickness of the first planar coil 11 is set at 0.5 mm, and the thickness of the second planar coil 12 is set at 0.25 mm. The comparative example 3-A is a coil component that is configured such that the thickness of the first planar coil 11 and the thickness of the second planar coil 12 are set at 0.5 mm, and the other structures are the same as those of the coil component 10C. The comparative example 3-B is a coil component that is configured such that the thickness of the first planar coil 11 is set at 0.25 mm, the thickness of the second planar coil 12 is set at 0.5 mm, and the other structures are the same as those of the coil component 10C. As for the coil component 10C, the comparative example 3-A, and the comparative example 3-B, the first planar coil 11 is composed of aluminum, and the second planar coil 12 is composed of copper. The comparative examples described herein by way of example are not necessarily excluded from the present disclosure (the present invention) but are included in the present disclosure (the present invention) depending on the condition of the frequency to be used.

[Table 9]

| | Coil thickness (mm) | Q value | Loss (W) | | | Resistance (@85kHz($\Omega$)) |
| --- | --- | --- | --- | --- | --- | --- |
| | | | Magnetic shield | Coil | Total | |
| Present disclosure | 050/025 | 195 | - | 72 | 72 | 0.058 |
| Comparative example 3-A | 050/050 | 190 | - | 74 | 74 | 0.060 |
| Comparative example 3-B | 025/050 | 167 | - | 85 | 85 | 0.068 |

"Present disclosure" in the vertical column on the left in Table 9 represents the coil component 10C, right-hand columns represent the condition of the coil thickness in the simulation, the Q value that is calculated in the simulation, the loss, and the resistance of the coil component 10C in this order. Similarly, the right-hand columns on the right of "Comparative example 3-A" and "Comparative example 3-B" in the vertical column on the left in Table 9 represent the condition of the coil thickness in the simulation, the Q value that is calculated in the simulation, the loss, and the resistance regarding the comparative examples in this order.

As clear from Table 9, the Q value of the coil component 10C is 195 and is larger than the Q value (190) of the comparative example 3-A and the Q value (167) of the comparative example 3-B. The loss (the loss at the coils 11 and 12) at the coil component 10C is less than the loss at the comparative example 3-A and the loss at the comparative example 3-B. The frequency of the alternating current to be applied to each coil component is set at 85 KHz, the simulation is run, and consequently, the alternating-current resistance of the coil component 10C is less than that of the comparative example 3-A and the comparative example 3-B.

It can be confirmed from the result of the simulation illustrated in Table 9 that the performance of the coil component 10C is excellent. In particular, as for the coil component 10C, the amount of the use of the coil material is smaller than that of the comparative example 3-A, and the performance that is more excellent than that of the comparative example 3-A is maintained. This point corroborates the usefulness of the present disclosure.

(Another Embodiment 5)

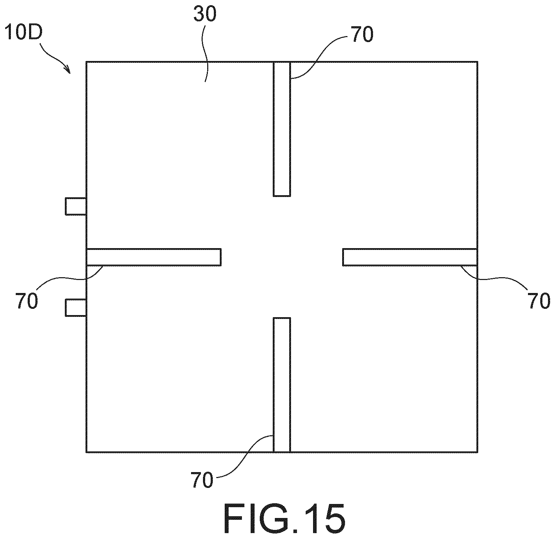

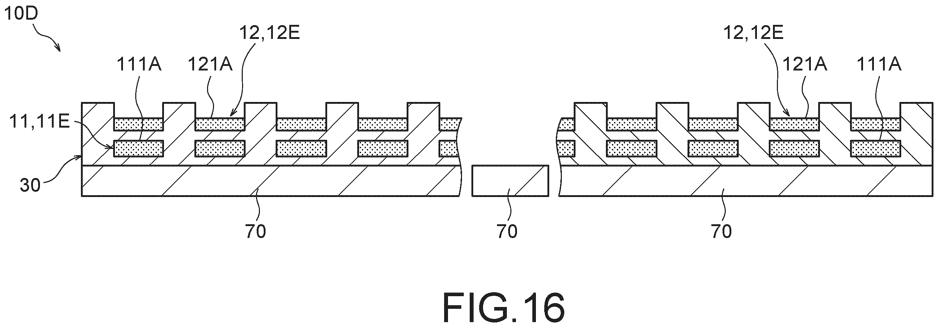

A coil component 10D illustrated in Fig. 14 to Fig. 16 includes the first planar coil 11, the second planar coil 12, the holding body 30, and magnetic block materials 70. This structure is useful to use for the power transmitter. The first planar coil 11, the second planar coil 12, and the holding body 30 have the same structure as the structure illustrated with reference to, for example, Fig. 2 to Fig. 5.

The coil component 10D includes multiple, four in this example, magnetic block materials 70. The magnetic block materials 70 cover the surface 111B of the first layer 31 of the holding body 30 opposite the surface that faces the first planar coil 11. However, the magnetic block materials 70 have an elongated plate shape and cover only portions of the first planar coil 11.

The magnetic block materials 70 are disposed such that the longitudinal direction thereof extends in the radial directions of the first planar coil 11 and the second planar coil 12 from positions outside the centers of the first planar coil 11 and the second planar coil 12 in the radial directions. The four magnetic block materials 70 are disposed at an interval of 90 degrees in the circumferential direction and form a cross shape when viewed in the direction in which the first planar coil 11 and the second planar coil 12 overlap. Three magnetic block materials 70 of the four magnetic block materials 70 are perpendicular to a respective one of the straight portions (11ns1, 11ns2, and 11ns3) of the first planar coil 11 and a respective one of the straight portions (12ns1, 12ns2, and 12ns3) of the second planar coil 12 at the middle points of the portions when viewed in the direction in which the first planar coil 11 and the second planar coil 12 overlap.

The number and positions of the magnetic block materials 70 are not particularly limited.

Also, as for the coil component 10D illustrated in Fig. 14 to Fig. 16, the thickness of the second planar coil 12 is 0.15 mm or more and 0.35 mm or less. Consequently, the coil component 10D enables the performance to be quit considerably improved in the case where the alternating current at 75 KHz or more and 100 KHz or less, at 79 KHz or more and 90 KHz or less, or at 85 KHz is applied, or the alternating magnetic field at 75 KHz or more and 100 KHz or less, at 79 KHz or more and 90 KHz or less, or at 85 KHz is applied. That is, in an example in which the coil component 10D is specifically used, the coil component 10D is also used for the power transmission system S illustrated in Fig. 1 and is configured such that the alternating current at 75 KHz or more and 100 KHz or less or at 79 KHz or more and 90 KHz or less is applied, or the alternating magnetic field at 75 KHz or more and 100 KHz or less or at 79 KHz or more and 90 KHz or less is applied as in the coil component 10 described above. This enables the coil component 10D to fulfill a useful function.

For example, the thickness (the thickness of the conductor 11E) of the first planar coil 11 may be 0.1 mm or more and 1.0 mm or less. The first planar coil 11, the second planar coil 12, and the holding body 30 can be formed in the same shapes and dimensional conditions as those of the components of the coil component 10 described with reference to, for example, Fig. 2 to Fig. 5. The coil component 10 and the coil component 10D differ from each other in shapes in the details of the first planar coil 11 and the second planar coil 12 but do not essentially differ from each other. Specifically, in this example, the direction in which the first planar coil 11 turns and the direction in which the second planar coil 12 turns are opposite those in the case of the coil component 10 described with reference to, for example, Fig. 2 to Fig. 5. The number of turns of the first planar coil 11 and the number of turns of the second planar coil 12 differ from those in the case of the coil component 10 described with reference to, for example, Fig. 2 to Fig. 5. The structures of the details are not particularly limited.

The result of simulation in which the performance of the coil component 10D is evaluated will now be described with reference to Table 10 described later. In Table 10, the result of evaluation of the coil component 10D and comparative examples 4-A and 4-B is illustrated. As for the coil component 10D that is simulated, the thickness of the first planar coil 11 is set at 0.5 mm, and the thickness of the second planar coil 12 is set at 0.25 mm. The comparative example 4-A is a coil component that is configured such that the thickness of the first planar coil 11 and the thickness of the second planar coil 12 are set at 0.5 mm, and the other structures are the same as those of the coil component 10D. The comparative example 4-B is a coil component that is configured such that the thickness of the first planar coil 11 is set at 0.25 mm, the thickness of the second planar coil 12 is set at 0.5 mm, and the other structures are the same as those of the coil component 10D. As for the coil component 10D, the comparative example 4-A, and the comparative example 4-B, the first planar coil 11 is composed of aluminum, and the second planar coil 12 is composed of copper. The comparative examples described herein by way of example are not necessarily excluded from the present disclosure (the present invention) but are included in the present disclosure (the present invention) depending on the condition of the frequency to be used.

[Table 10]

| | Coil thickness (mm) | Q value | Loss (W) | | | Resistance (@85kHz($\Omega$)) |
|---|---|---|---|---|---|---|
| | | | Magnetic shield | Coil | Total | |
| Present disclosure | 050/025 | 235 | - | 100 | 100 | 0.080 |
| Comparative example 4-A | 050/050 | 156 | - | 151 | 151 | 0.120 |
| Comparative example 4-B | 025/050 | 142 | - | 165 | 165 | 0.132 |

"Present disclosure" in the vertical column on the left in Table 10 represents the coil component 10D, and right-hand columns represent the condition of the coil thickness in the simulation, the Q value that is calculated in the simulation, the loss, and the resistance of the coil component 10D in this order. Similarly, the right-hand columns on the right of "Comparative example 4-A" and "Comparative example 4-B" in the vertical column on the left in Table 10 represent the condition of the coil thickness in the simulation, the Q value that is calculated in the simulation, the loss, and the resistance regarding the comparative examples in this order.

As clear from Table 10, the Q value of the coil component 10D is 235 and is larger than the Q value (156) of the comparative example 4-A and the Q value (142) of the comparative example 4-B. The loss (the loss at the coils 11 and 12) at the coil component 10D is less than the loss at the comparative example 4-A and the loss at the comparative example 4-B. The frequency of the alternating current to be applied to each coil component is set at 85 KHz, the simulation is run, and consequently, the alternating-current resistance of the coil component 10D is less than that of the comparative example 4-A and the comparative example 4-B.

It can be confirmed from the result of the simulation illustrated in Table 10 that the performance of the coil component 10D is excellent. In particular, as for the coil component 10D, the amount of the use of the coil material is smaller than that of the comparative example 4-A, and the performance that is more excellent than that of the comparative example 4-A is maintained. This point corroborates the usefulness of the present disclosure.

The following description contains the result of simulation regarding the performance according to the embodiment in the case where the first planar coil 11 is composed of aluminum, and the second planar coil 12 is composed of copper as for the coil component 10 illustrated in Fig. 2 to Fig. 5. The simulation is run by using Femtet (registered trademark) made by Murata Software Co., Ltd.

As for the simulation described later, multiple values are set to the thickness of the first planar coil 11 and the thickness of the second planar coil 12 of the coil component 10 according to embodiment described above, and the corresponding Q value is calculated. The simulation of the Q value of multiple coil components is run as a comparative example where "conditions in which the first planar coil 11 is composed of aluminum, and the second planar coil 12 is composed of copper" or the "dimensional conditions" are outside those according to the embodiment described with reference to Fig. 2 to Fig. 5. The comparative examples described herein by way of example are not necessarily excluded from the present disclosure (the present invention) but are included in the present disclosure (the present invention) depending on the condition of the frequency to be used.

Detailed conditions of the simulation are as follows.

· The high-frequency current to be applied is 40 A, and the frequency is 85 KHz.

· The electrical conductivity of the first planar coil 11 composed of aluminum is $3.77 \times 10^7$ [S/m]. The electrical conductivity of the second planar coil 12 composed of copper is $5.98 \times 10^7$ [S/m].

· The relative permeability of the magnetic shield member 20 is 3000, and the relative permeability of the holding body 30 is 5.0.

· The widths of the conductor 11E of the first planar coil 11 and the conductor 12E of the second planar coil 12 in the direction of the line IV-IV illustrated in Fig. 2 are 200 mm, and the widths of the conductor 11E of the first planar coil 11 and the conductor 12E of the second planar coil 12 in the direction perpendicular to the line IV-IV are 200 mm.

The result of the simulation regarding the embodiment described above is illustrated in Table 11 described later. The multiple dimensional conditions, weight W (Kg/m$^2$) per one square meter, and the Q value and Z (impedance ($\Omega$)) that correspond to the result of the simulation of the coil component 10 according to the embodiment are vertically arranged and are illustrated below "Embodiment" illustrated at the top in Table 11. The result of the simulation regarding a comparative example is illustrated in Table 12 described later. The multiple dimensional conditions of a coil component in the comparative example, the weight W (Kg/m$^2$) per one square meter, the Q value and Z (the impedance ($\Omega$)) that correspond to the result of the simulation are vertically arranged and are illustrated below "Comparative example" illustrated at the top in Table 12. The basic structure of the coil component in the comparative example is the same as that of the coil component 10 except that the dimensional conditions and the conditions of the coil material are outside the conditions according to the embodiment. The "weight W (Kg/m$^2$) of the coil component 10 per one square meter" described above means the sum of the weight of the first planar coil 11 per one square meter and the weight W of the second planar coil 12 per one square meter. The weight of each of the first planar coil 11 and the second planar coil 12 per one square meter is calculated by multiplying the specific gravity (weight per one square meter) of the material and the thickness. For example, the weight W (Kg/m$^2$) of a copper coil having a thickness of 0.25 mm per one square meter is 2.24 Kg/m$^2$ when the specific gravity is 8960 Kg/m$^3$, and the specific gravity is determined when the material is specified and is also calculated by dividing the weight by the volume of one coil piece.

[Table 11]

|  | Embodiment | | | | | |
|---|---|---|---|---|---|---|
|  | 1 | 2 | 3 | 4 | 5 | 6 |
| Second planar coil (Material/thickness (mm)) | Cu/0.25 | Cu/0.35 | Al/0.25 | Al/0.35 | Al/0.25 | Al/0.25 |
| First planar coil (Material/thickness (mm)) | Al/0.5 | Al/0.5 | Al/0.5 | Al/0.5 | Al/1.0 | Al/0.25 |
| W (Kg/m$^2$) | 3.6 | 4.5 | 2 | 2.3 | 3.4 | 1.4 |
| Q value | 173.1 | 152.1 | 146.4 | 147.2 | 148.5 | 129.3 |
| Z ($\Omega$) | 0.156 | 0.177 | 0.184 | 0.184 | 0.181 | 0.209 |

[Table 12]

|  | Comparative example | | | | | | | | | |
|---|---|---|---|---|---|---|---|---|---|---|
|  | 1 | 2 | 3 | 4 | 5 | 6 | 7 | 8 | 9 | 10 |
| Second planar coil (Material/thickness (mm)) | Al/0.5 | Al/0.25 | Al/0.5 | Al/0.5 | Cu/0.5 | Al/0.5 | Cu/0.1 | Al/0.1 | Cu/0.25 | Cu/0.5 |
| First planar coil (Material/thickness (mm)) | Cu/0.25 | Cu/0.5 | Al/0.25 | Al/0.5 | Al/0.5 | Cu/0.5 | Al/0.5 | Al/0.5 | Cu/0.5 | Cu/0.5 |
| W (Kg/m$^2$) | 3.6 | 5.1 | 2 | 2.7 | 5.8 | 5.8 | 2.2 | 1.6 | 6.7 | 8.9 |
| Q value | 118.6 | 155.1 | 107.2 | 118.5 | 117.4 | 124.2 | 119.1 | 89.7 | 241 | 144.3 |
| Z ($\Omega$) | 0.229 | 0.174 | 0.253 | 0.228 | 0.23 | 0.218 | 0.225 | 0.3 | 0.129 | 0.215 |

The inventor has found the phenomenon in which when the thickness of the second planar coil 12 is 0.15 mm or more and 0.35 mm or less, the performance of the coil component 10 that is used in the predetermined frequency band is considerably improved in the case where the first planar coil 11 and the second planar coil 12 are stacked above the magnetic shield member 20 and the holding body 30 as described above. Specifically, it has been found that when the thickness of the second planar coil that overlaps the first planar coil 11 and that is used in the predetermined frequency band is set at a value of 0.15 mm or more and 0.35 mm or less, the Q value of the coil component 10 is very large. Specifically, the predetermined frequency band described above is a frequency band of 75 KHz or more and 100 KHz or less, and the performance of the coil component 10 is improved with certainty in the case where when the predetermined frequency band is a band of 79 KHz or more and 90 KHz or less.

As for the simulation regarding the embodiment, in simulation 1, the thickness of the first planar coil 11 composed of aluminum is 0.5 mm, and the thickness of the second planar coil 12 composed of copper is 0.25 mm as illustrated in Table 11. In simulation 2, the thickness of the first planar coil 11 composed of aluminum is 0.5 mm, and the thickness of the second planar coil 12 composed of copper is 0.35 mm. In simulation 3, the thickness of the first planar coil 11 composed of aluminum is 0.5 mm, and the thickness of the second planar coil 12 composed of aluminum is 0.25 mm. In simulation 4, the thickness of the first planar coil 11 composed of aluminum is 0.5 mm, and the thickness of the second planar coil 12 composed of aluminum is 0.35 mm. In simulation 5, the thickness of the first planar coil 11 composed of aluminum is 1.0 mm, and the thickness of the second planar coil 12 composed of aluminum is 0.25 mm. In simulation 6, the thickness of the first planar coil 11 composed of aluminum is 0.25 mm, and the thickness of the second planar coil 12 composed of aluminum is 0.25 mm. The thickness of the second planar coil 12 in the simulation is set at a value of 0.15 mm or more and 0.35 mm or less. The Q value in the simulation 6 is the minimum and is 129.3, and the Q value in the simulation 1 to the simulation 5 is 140 or more.

As for comparative examples 1 and 3 to 8, the thickness of a coil corresponding to the second planar coil is outside the range of 0.15 mm or more and 0.35 mm or less unlike the simulation regarding the embodiment described above. The Q value of the comparative example 7 that is the maximum among the comparative examples 1 and 3 to 8 is 124.2, is smaller than the Q value that is calculated in the simulation regarding the embodiment, and is very small particularly in comparison with the simulation 1 to the simulation 5. For example, in the comparative example 5, the thickness of an aluminum coil corresponding to the first planar coil is 0.5 mm, and the thickness of a copper coil corresponding to the second planar coil is 0.5 mm. In the comparative example 5 in which the conditions of the first planar coil are shared with the simulation 1 regarding the embodiment, and the material of the second planar coil is the same as that in the simulation 1, the Q value is 50 or more smaller than that in the simulation 1. In the comparative example 4, the thickness of an aluminum coil corresponding to the first planar coil is 0.5 mm, and the thickness of an aluminum coil corresponding to the second planar coil is 0.5 mm. In the comparative example 4 in which the conditions of the first planar coil are shared with the simulation 3 regarding the embodiment, and the material of the second planar coil is the same as that in the simulation 3, the Q value is about 30 smaller than that in the simulation 3.

The result of the simulation described above corroborates that when the thickness of the second planar coil 12 is 0.15 mm or more and 0.35 mm or less, the performance of the coil component 10 that is used in the predetermined frequency band is considerably improved. In the simulation described above, conditions in which the thickness of the second planar coil 12 is in a range of 0.15 mm or more and less than 0.25 mm are not verified, but the inventor has confirmed that relatively high coil performance can be maintained in this range. When the thickness of the second planar coil 12 is less than 0.15 mm or is more than 0.35 mm, the Q value tends to decrease. Accordingly, the thickness of the second planar coil 12 may be close to an intermediate value of 0.15 mm to 0.35 mm, the thickness of the second planar coil 12 may be 0.20 mm or more and 0.30 mm or less, or the thickness may be 0.20 mm or more and 0.275 mm or less or may be 0.225 mm or more and 0.275 mm or less.

According to the knowledge of the inventor, good coil performance is obtained in the case where the thickness of a coil nearest to the magnetic shield member 20 has a relatively large value. In this perspective, the thickness of the first planar coil 11 may be 0.5 mm or more and 1.0 mm or less. For example, in the simulation 1 to the simulation 5, the thickness of the first planar coil 11 is in a range of 0.5 mm or more and 1.0 mm or less. In the simulation 6, the thickness of the first planar coil 11 is 0.25 mm, and the Q value is smaller than that in the simulation 1 to the simulation 5. The result corroborates that the condition that the thickness of the first planar coil 11 is 0.5 mm or more and 1.0 mm or less is effective. In comparison between the simulation 3 and the simulation 5, the thickness of the first planar coil 11 in the simulation 5 is two times the thickness of the first planar coil 11 in the simulation 3, but a difference in the Q value therebetween is not large. It is presumed from the result that the performance that is maintained by maintaining the thickness of the first planar coil 11 tends to no longer change from that in the case of a thickness of 1 mm. In consideration of a decrease in thickness and a decrease in weight in this perspective, it is effective that the thickness of the first planar coil 11 is set at 1.0 mm or less in order to obtain the coil component 10 rationally.

According to the present embodiment, the first planar coil 11 contains aluminum. This enables the weight to be decreased. As for the coil component 10 the simulation of which is run as illustrated in Table 11, the total weight of the first planar coil 11 and the second planar coil 12 is decreased to light weight. Specifically, in the simulation 1 to the simulation 6, the weight of the first planar coil 11 per one square meter and the weight of the second planar coil 12 per one square meter are 5 Kg/m$^2$ or less. On this matter, considering the comparative examples 2, 9, and 10 in which the Q value that is calculated is equal to or larger than the Q value in the simulation 1 to the simulation 6, the total weight per one square meter in the comparative examples is heavy and is more than 5 Kg/m$^2$ (5.1 Kg/m$^2$, 6.7 Kg/m$^2$, and 8.9 Kg/m$^2$). In addition, costs can be increased because of a large amount of copper to be used. The coil component 10 according to the present embodiment enables the coil performance (the Q value) to be rationally maintained unlike the comparative examples 2, 9, and 10.

The coil component 10 in the simulation described above inhibits the size and the weight from increasing, decreases the costs, and is likely to maintain the desired performance. In general, it is presumed that as the thickness of the coil increases, the inductance of a coil tends to increase, and the performance of the coil such as the Q value tends to be improved. However, the inventor has found from diligent research that the structure in which the planar coils are connected to each other in series and overlap the member that exerts magnetism does not necessarily have such a tendency. The inventor has found that when the thickness of the second planar coil 12 is 0.15 mm or more and 0.35 mm or less, the Q value is very large regardless of the thickness of the first planar coil 11 in the case where the alternating current or the alternating magnetic field in the predetermined frequency band is applied in the structure in which the first planar coil 11 and the second planar coil 12 are stacked in this order above the magnetic shield member 20 and the holding body 30. It has been revealed from the findings that the use of the second planar coil 12 the thickness of which is 0.25 mm enables the performance of the coil component 10 to be improved, for example, more than in the case of the use of the second planar coil 12 the thickness of which is 0.5 mm.

That is, as for the coil component 10 based on the findings, the thickness of the second planar coil 12 is set at 0.15 mm or more and 0.35 mm or less, and consequently, the thickness of the second planar coil 12 to be decreased. The performance of the coil component 10 that is used in the predetermined frequency band can be improved as much as possible. This enables the entire size and weight of the coil component 10 to be inhibited from increasing and enables the performance of the coil component 10 to be improved. It is difficult to predict, from the technical common sense, the phenomenon in which when the thickness of the second planar coil 12 is 0.15 mm or more and 0.35 mm or less, the Q value is very large regardless of the thickness of the first planar coil 11 in the case where the alternating current or the alternating magnetic field in the predetermined frequency band is applied in the structure in which the first planar coil 11 and the second planar coil 12 are stacked in this order above the magnetic shield member 20 and the holding body 30. It is certain that the above-described coil component that is invented based on the phenomenon exerts the remarkable effect that greatly contributes to the improvement in the performance of the coil component. In addition, a material that contains aluminum is used as the material of the first planar coil 11. This enables the weight to be effectively inhibited from increasing, decreases the costs, and enables the high coil performance to be rationally maintained. Accordingly, according to the present embodiment, the size and the weight are inhibited from increasing, the costs are decreased, and the desired performance is likely to be maintained.

Specifically, the inventor has found that when the thickness of the second planar coil 12 is 0.15 mm or more and 0.35 mm or less, the Q value is very large regardless of the thickness of the first planar coil 11 in the case where the alternating current at 75 KHz or more and 100 KHz or less, particularly, at 79 KHz or more and 90 KHz or less is applied, or the alternating magnetic field at 75 KHz or more and 100 KHz or less, particularly, at 79 KHz or more and 90 KHz or less is applied to the first planar coil 11 and the second planar coil 12. That is, the structure in which the thickness of the second planar coil 12 is set at 0.15 mm or more and 0.35 mm or less considerably improves the performance in the case where the alternating current at 75 KHz or more and 100 KHz or less, particularly, at 79 KHz or more and 90 KHz or less is applied or the alternating magnetic field at 75 KHz or more and 100 KHz or less, particularly, at 79 KHz or more and 90 KHz or less is applied as the alternating current or the alternating magnetic field in the predetermined frequency band.

<Another Embodiment>

The coil components according to the embodiments described above considerably improves the performance in the case where the alternating current at 75 KHz or more and 100 KHz or less, at 79 KHz or more and 90 KHz or less, or at 85 KHz is applied, or the alternating magnetic field at 75 KHz or more and 100 KHz or less, at 79 KHz or more and 90 KHz or less, or at 85 KHz is applied. In contrast, in the case where the frequency of the alternating current or the alternating magnetic field to be applied is outside the range of 75 KHz or more and 100 KHz or less, an embodiment for a coil component that enables the performance to be considerably improved differs from the embodiments described above. The embodiment of the present disclosure that enables the performance to be improved in another frequency band outside the range of 75 KHz or more and 100 KHz or less will be described below.

(Another Embodiment 6)

According to another embodiment (an embodiment 6), in the case where an alternating current at 100 KHz or more and less than 200 KHz or an alternating magnetic field at 100 KHz or more and less than 200 KHz is applied to a coil, a coil component may have a structure described below.

The "coil component includes:

the first planar coil 11; and

the second planar coil 12 that is stacked with the first planar coil 11; and

the holding body 30 corresponding to a magnetic member that exerts magnetism and that includes the portion (the portion of the first layer described with reference to Fig. 2 to Fig. 5) that covers the surface of the first planar 11 coil opposite the surface that faces the second planar coil 12,

the first planar coil 11 and the second planar coil 12 are connected to each other in series,

the thickness of the second planar coil 12 is 0.225 mm or more and 0.275 mm or less, and

the first planar coil 11 and the second planar coil 12 are configured such that the alternating current at 100 KHz or more and less than 200 KHz is applied, or the alternating magnetic field at 100 KHz or more and less than 200 KHz is applied".

The above structure is referred to below as an embodiment 6-1.

The coil component according to the embodiment 6-1 described above may further include the magnetic shield member 20 as in the structure described with reference to Fig. 2 to Fig. 5 (an embodiment 6-2).

The coil component according to the embodiment 6-1 described above may further include the first magnetic shield member 20 and the second magnetic shield member 60 as in the structure described with reference to Fig. 10 (an embodiment 6-3).

As for the coil component according to the embodiment 6-1 described above, the holding body 30 may partly cover the first planar coil 11 as in the structure described with reference to Fig. 11 and Fig. 12 (an embodiment 6-4). The holding body 30 may include the multiple pieces 301 to 303 that are divided.

The coil component according to the embodiment 6-1 described above may include the magnetic block materials 70 as in the structure described with reference to Fig. 14 to Fig. 16 (an embodiment 6-5).

The result of simulation in which the performance of the coil components according to the embodiments 6-1 to 6-5 is evaluated will now be described with reference to Table 13 described later. In Table 13, the result of evaluation of the coil components according to the embodiments 6-1 to 6-5 and comparative examples against the embodiments is illustrated. As for the coil components according to the embodiments 6-1 to 6-5 that are simulated, the thickness of the first planar coil 11 is set at 0.5 mm, and the thickness of the second planar coil 12 is set at 0.25 mm. Comparative examples 6-A1 to 6-A5 are coil components that are configured such that the thickness of the first planar coil 11 and the thickness of the second planar coil 12 are set at 0.5 mm, and the other structures are the same as those of the coil components according to the embodiments 6-1 to 6-5. As for the coil components according to the embodiments 6-1 to 6-5 and the comparative examples, the first planar coil 11 is composed of aluminum, and the second planar coil 12 is composed of copper. The comparative examples described herein by way of example are not necessarily excluded from the present disclosure (the present invention) but are included in the present disclosure (the present invention) depending on the condition of the frequency to be used.

[Table 13]

| | Coil thickness (mm) | Q value (100/150/200kHz) | Loss (W) | | | Resistance (@100/150/200kHz) (Ω) | Structure |
|---|---|---|---|---|---|---|---|
| | | | Magnetic shield (100/150/200kHz) | Coil (100/150/200kHz) | Total (100/150/200kHz) | | |
| Present disclosure 6-1 | 050/025 | 217/273/315 | - | 77/91/105 | 77/91/105 | 0.061/0.073/0.084 | First + Second + Magnetic member |
| Comparative example 6-A1 | 050/050 | 203/245/288 | - | 82/102/115 | 82/102/115 | 0.066/0.081/0.092 | |
| Present disclosure 6-2 | 050/025 | 253/288/303 | - | 109/144/182 | 109/144/182 | 0.087/0.115/0.145 | First + Second + Magnetic member + Ferrite |
| Comparative example 6-A2 | 050/050 | 161/183/212 | - | 172/225/260 | 172/225/260 | 0.137/0.180/0.208 | |
| Present disclosure 6-3 | 050/025 | 197/224/239 | 26/35/42 | 108/142/221 | 134/176/221 | 0.108/0.141/0.177 | First + Second + Magnetic member + Ferrite + AL |
| Comparative example 6-A3 | 050/050 | 135/154/178 | 26/34/41 | 170/223/256 | 196/257/297 | 0.157/0.205/0.237 | |
| Present disclosure 6-4 | 050/025 | 104/128/145 | 22/29/36 | 106/236/276 | 219/266/311 | 0.175/0.213/0.249 | First + second + Magnetic block + Ferrite + AL |
| Comparative example 6-A4 | 050/050 | 89/105/121 | 22/29/35 | 231/292/335 | 253/321/370 | 0.202/0.257/0.296 | |
| Present disclosure 6-5 | 050/025 | 232/286/323 | - | 82/99/118 | 82/99/118 | 0.066/0.079/0.094 | First + Second + Magnetic member + Ferrite in rod form |
| Comparative example 6-A5 | 050/050 | 194/231/271 | - | 98/123/140 | 98/123/140 | 0.078/0.099/0.112 | |

"Present disclosure 6-1 to 6-5" in the vertical column on the left in Table 13 represents the coil components according to the embodiments 6-1 to 6-5, and right-hand columns represent the condition of the coil thickness in the simulation, the Q value that is calculated in the simulation, the loss, and the resistance of the coil components according to the embodiments in this order. Similarly, the right-hand columns on the right of "Comparative examples 6-A1 to 6-A5" in the vertical column on the left in Table 13 represent the condition of the coil thickness in the simulation, the Q value that is calculated in the simulation, the loss, and the resistance regarding the comparative examples in this order. The frequency of the alternating current to be applied to each coil component is set at 100 KHz, 150 KHz, or 200 KHz, and the simulation is run.

As clear from Table 13, the Q value of the coil components according to the embodiments 6-1 to 6-5 is larger than the Q value of the corresponding comparative examples. The loss at the coil components according to the embodiments 6-1 to 6-5 is less than the loss at the comparative examples. The alternating-current resistance of the coil components according to the embodiments 6-1 to 6-5 is less than that of the comparative examples.

It can be confirmed from the result of the simulation illustrated in Table 13 that the performance of the coil components according to the embodiments 6-1 to 6-5 is excellent.

As for the coil components according to the embodiments 6-1 to 6-5, the frequency band of the alternating current or the alternating magnetic field to be applied, which is a condition for use, differs from, for example, that of the coil component 10 according to the embodiment described above, but the range of the thickness of the second planar coil 12 that is used is the same. As for the coil components according to the embodiments 6-1 to 6-5, the range of the thickness of the second planar coil 12 that is used is narrower than the range of the thickness of the second planar coil 12 of the coil component 10 according to the embodiment described above. The coil components according to the embodiments 6-1 to 6-5 enable very good performance to be obtained when the thickness of the second planar coil 12 is in a range of 0.225 mm or more and 0.275 mm or less, and the performance relatively considerably declines in a range outside the range. For this reason, as for the coil components according to the embodiments 6-1 to 6-5, the thickness of the second planar coil 12 is 0.225 mm or more and 0.275 mm or less.

(Another Embodiment 7)

According to another embodiment (an embodiment 7), in the case where an alternating current at 200 KHz or more and 1 MHz or less is applied or an alternating magnetic field at 200 KHz or more and 1 MHz or less is applied to a coil, a coil component may have a structure described below.

The "coil component includes:

the first planar coil 11;

the second planar coil 12 that is stacked with the first planar coil 11; and

the holding body 30 corresponding to a magnetic member that exerts magnetism and that includes the portion (the portion of the first layer described with reference to Fig. 2 to Fig. 5) that covers the surface of the first planar coil 11 opposite the surface that faces the second planar coil 12,

the first planar coil 11 and the second planar coil 12 are connected to each other in series,

the thickness of the second planar coil 12 is 0.075 mm or more and 0.175 mm or less, and

the first planar coil 11 and the second planar coil 12 are configured such that the alternating current at 200 KHz or more and 1 MHz or less is applied, or the alternating magnetic field at 200 KHz or more and 1 MHz or less is applied."

The above structure is referred to below as an embodiment 7-1.

The coil component according to the embodiment 7-1 described above may further include the magnetic shield member 20 as in the structure described with reference to Fig. 2 to Fig. 5 (an embodiment 7-2).

The coil component according to the embodiment 7-1 described above may further include the first magnetic shield member 20 and the second magnetic shield member 60 as in the structure described with reference to Fig. 10 (an embodiment 7-3).

As for the coil component according to the embodiment 7-1 described above, the holding body 30 may partly cover the first planar coil 11 as in the structure described with reference to Fig. 11 and Fig. 12 (an embodiment 7-4). The holding body 30 may include the multiple pieces 301 to 303 that are divided.

The coil component according to the embodiment 7-1 described above may include the magnetic block materials 70 as in the structure described with reference to Fig. 14 to Fig. 16 (an embodiment 5-5).

The result of simulation in which the performance of the coil components according to the embodiments 7-1 to 7-5 is evaluated will now be described with reference to Table 14 and Table 15 described later. The result of evaluation of the coil components according to the embodiments 7-1 to 7-5 and comparative examples against the embodiments is illustrated in Table 14 and Table 15. As for the coil components according to the embodiments 7-1 to 7-5 that are simulated, the thickness of the first planar coil 11 is set at 0.5 mm, and the thickness of the second planar coil 12 is set at 0.10 mm or 0.15 mm. The result of the simulation in which the thickness of the second planar coil 12 is 0.10 mm is illustrated in Table 14, and the result of the simulation in which the thickness of the second planar coil 12 is 0.15 mm is illustrated in Table 15. The comparative examples described herein by way of example are not necessarily excluded from the present disclosure (the present invention) but are included in the present disclosure (the present invention) depending on the condition of the frequency to be used.

As for coil components that are configured as comparative examples 7-A1 to 7-A5 against the coil components according to the embodiments 7-1 to 7-5 in which the thickness of the second planar coil 12 is 0.10 mm, the thickness of the first planar coil 11 and the thickness of the second planar coil 12 are set at 0.5 mm, and the other structures are the same as those of the coil components 10D according to the embodiments 7-1 to 7-5.

As for coil components that are configured as the comparative examples 7-A1 to 7-A5 against the coil components according to the embodiments 7-1 to 7-5 in which the thickness of the second planar coil 12 is 0.15 mm, the thickness of the first planar coil 11 and the thickness of the second planar coil 12 are set at 0.5 mm, and the other structures are the same as those of the coil components 10D according to the embodiments 7-1 to 7-5.

As for the coil components according to the embodiments 7-1 to 7-5 and the comparative examples, the first planar coil 11 is composed of aluminum, and the second planar coil 12 is composed of copper.

[Table 14]

| | Coil thickness (mm) | Q value (200/500/1000kHz) | Loss (W) | | | Resistance (@200/500/1000kHz) (Ω) | Structure |
|---|---|---|---|---|---|---|---|
| | | | Magnetic shield (200/500/1000kHz) | Coil (200/500/1000kHz) | Total (200/500/1000kHz) | | |
| Present disclosure 7-1 | 050/010 | 242/517/833 | - | 137/161/199 | 137/161/199 | 0.110/0.128/0.159 | First + Second + Magnetic member |
| Comparative example 7-A1 | 050/050 | 288/561/1013 | - | 115/147/163 | 115/147/163 | 0.092/0.118/0.131 | |
| Present disclosure 7-2 | 050/010 | 321/623/821 | - | 171/220/334 | 171/220/334 | 0.137/0.176/0268 | First + Second + Magnetic member + Ferrite |
| Comparative example 7-A2 | 050/050 | 212/409/743 | - | 260/335/368 | 260/335/368 | 0.208/0.268/0.295 | |
| Present disclosure 7-3 | 050/010 | 248/464/636 | 42/66/86 | 171/217/328 | 212/283/414 | 0.170/0.227/0.331 | First + Second + Magnetic member + Ferrite + AL |
| Comparative example 7-A3 | 050/050 | 178/337/603 | 41/64/83 | 256/325/352 | 297/390/435 | 0.237/0.312/0.348 | |
| Present disclosure 7-4 | 050/010 | 125/240/377 | 36/57/72 | 266/557/848 | 301/614/921 | 0.290/0.377/0.480 | First + Second + Magnetic block + Ferrite + AL |
| Comparative example 7-A4 | 050/050 | 121/224/401 | 35/56/71 | 335/441/483 | 370/497/554 | 0.296/0.398/0.443 | |
| Present disclosure 7-5 | 050/010 | 266/557/848 | - | 143/170/223 | 143/170/223 | 0.114/0.136/0.179 | First + Second + Magnetic member + Ferrite in rod form |
| Comparative example 7-A5 | 050/050 | 271/529/960 | - | 140/179/197 | 140/179/197 | 0.112/0.143/0.157 | |

[Table 15]

| | Coil thickness (mm) | Q value (200/500/1000kHz) | Loss (W) | | | Resistance (@200/500/1000kHz) (Ω) | Structure |
|---|---|---|---|---|---|---|---|
| | | | Magnetic shield (200/500/1000kHz) | Coil (200/500/1000kHz) | Total (200/500/1000kHz) | | |
| Present disclosure 7-1 | 050/015 | 298/544/751 | - | 111/153/221 | 111/153/221 | 0.089/0.122/0.177 | First + Second + Magnetic member |
| Comparative example 7-A1 | 050/050 | 288/561/1013 | - | 115/147/163 | 115/147/163 | 0.092/0.118/0.131 | |
| Present disclosure 7-2 | 050/015 | 371/529/584 | - | 148/259/470 | 148/259/470 | 0.119/0.208/0.376 | First + Second + Magnetic member + Ferrite |
| Comparative example 7-A2 | 050/050 | 212/409/743 | - | 260/335/368 | 260/335/368 | 0.208/0.268/0.295 | |
| Present disclosure 7-3 | 050/015 | 279/408/479 | 42/66/86 | 147/256/463 | 189/322/549 | 0.151/0.258/0.439 | First + Second + Magnetic member + Ferrite + AL |
| Comparative example 7-A3 | 050/050 | 178/337/603 | 41/64/83 | 256/325/352 | 297/390/435 | 0.237/0.312/0.348 | |
| Present disclosure 7-4 | 050/015 | 144/247/335 | 36/56/72 | 280/401/602 | 315/457/674 | 0.252/0.366/0.539 | First + Second + Magnetic block + Ferrite + AL |
| Comparative example 7-A4 | 050/050 | 121/224/401 | 35/56/71 | 335/441/483 | 370/497/554 | 0.296/0.398/0.443 | |
| Present disclosure 7-5 | 050/015 | 329/555/712 | - | 117/171/266 | 117/171/266 | 0.093/0.136/0213 | First + Second + Magnetic member + Ferrite in rod form |
| Comparative example 7-A5 | 050/050 | 271/529/960 | - | 140/179/197 | 140/179/197 | 0.112/0.143/0.157 | |

"Present disclosure 7-1 to 7-5" in the vertical column on the left in Table 14 and Table 15 represents the coil components according to the embodiments 7-1 to 7-5, and right-hand columns represent the condition of the coil thickness in the simulation, the Q value that is calculated in the simulation, the loss, and the resistance of the coil components according to the embodiments in this order. Similarly, the right-hand columns on the right of "Comparative examples 7-A1 to 7-A5" in the vertical column on the left in Table 14 and Table 15 represent the condition of the coil thickness in the simulation, the Q value that is calculated in the simulation, the loss, and the resistance regarding the comparative examples in this order. The frequency of the alternating current to be applied to each coil component is set at 100 KHz, 150 KHz, or 200 KHz, and the simulation is run.

As clear from Table 14 and Table 15, the Q value of the coil components according to the embodiments 7-1 to 7-5 is mostly larger than the Q value of the comparative examples. The loss at the coil components according to the embodiments 7-1 to 7-5 is mostly less than the loss at the comparative examples and the loss at the comparative examples. The alternating-current resistance of the coil components according to the embodiments 7-1 to 7-5 is mostly less than that of the comparative examples. As for the comparative example 7-A1 and the comparative example 7-A5 in Table 14, the Q value is larger than that according to the present disclosure in some conditions, but it goes without saying that the present disclosure is more useful than the comparative examples in consideration of the amount of the coil material to be used.

It can be confirmed from the result of the simulation illustrated in Table 14 and Table 15 that the performance of the coil components according to the embodiments 7-1 to 7-5 is excellent.

(Another Embodiment 8)

According to another embodiment (an embodiment 8), in the case where an alternating current at 1.1 MHz or more is applied or an alternating magnetic field at 1.1 MHz or more is applied to a coil, a coil component may have a structure described below.

The "coil component includes:

the first planar coil 11;

the second planar coil 12 that is stacked with the first planar coil 11; and

the holding body 30 corresponding to a magnetic member that exerts magnetism and that includes the portion (the portion of the first layer described with reference to Fig. 2 to Fig. 5) that covers the surface of the first planar coil 11 opposite the surface that faces the second planar coil 12,

the first planar coil 11 and the second planar coil 12 are connected to each other in series,

the thickness of the second planar coil 12 is 0.45 mm or more, and

the first planar coil 11 and the second planar coil 12 are configured such that the alternating current at 1.1 MHz or more is applied, or the alternating magnetic field at 1.1 MHz or more is applied."

The above structure is referred to below as an embodiment 8-1.

The coil component according to the embodiment 8-1 described above may further include the magnetic shield member 20 as in the structure described with reference to Fig. 2 to Fig. 5 (an embodiment 8-2).

The coil component according to the embodiment 8-1 described above may further include the first magnetic shield member 20 and the second magnetic shield member 60 as in the structure described with reference to Fig. 10 (an embodiment 8-3).

As for the coil component according to the embodiment 8-1 described above, the holding body 30 may partly cover the first planar coil 11 as in the structure described with reference to Fig. 11 and Fig. 12 (an embodiment 8-4). The holding body 30 may include the multiple pieces 301 to 303 that are divided.

The coil component according to the embodiment 8-1 described above may include the magnetic block materials 70 as in the structure described with reference to Fig. 14 to Fig. 16 (an embodiment 8-5).

The result of simulation in which the performance of coil components according to the embodiments 8-1 to 8-5 is evaluated will now be described with reference to Table 16 described later. In Table 16, the result of evaluation of the coil components according to the embodiments 8-1 to 8-5 and comparative examples against the embodiments is illustrated. As for the coil components according to the embodiments 8-1 to 8-5 that are simulated, the thickness of the first planar coil 11 is set at 0.5 mm, and the thickness of the second planar coil 12 is set at 0.5 mm. The comparative examples 8-A1 to 8-A5 are coil components that are configured such that the thickness of the first planar coil 11 is set at 0.50 mm, the thickness of the second planar coil 12 is set at 0.25 mm, and the other structures are the same as those of the coil components according to the embodiments 8-1 to 8-5. As for the coil components according to the embodiments 8-1 to 8-5 and the comparative examples, the first planar coil 11 is composed of aluminum, and the second planar coil 12 is composed of copper. The comparative examples described herein by way of example are not necessarily excluded from the present disclosure (the present invention) but are included in the present disclosure (the present invention) depending on the condition of the frequency to be used.

[Table 16]

| | Coil thickness (mm) | Q value (1.1/6.78/13.56MHz) | Loss (W) | | | Resistance (@1.1/6.78/13.56MHz) (Ω) | Structure |
|---|---|---|---|---|---|---|---|
| | | | Magnetic shield (1.1/6.78/13.56MHz) | Coil (1.1/6.78/13.56MHz) | Total (1.1/678/13.56MHz) | | |
| Present disclosure 8-1 | 050/050 | 1100/6374/12719 | - | 164/176/176 | 164/176/176 | 0.132/0.141/0.141 | First + Second + Magnetic member |
| Comparative example 8-A1 | 050/025 | 800/4028/7913 | - | 223/279/284 | 223/279/284 | 0.185/0.223/0.227 | |
| Present disclosure 8-2 | 050/050 | 800/4703/9387 | - | 370/395/395 | 370/395/395 | 0.300/0.316/0.316 | First + Second + Magnetic member + Ferrite |
| Comparative example 8-A2 | 050/025 | 550/2799/5501 | - | 527/664/676 | 527/664/676 | 0.425/0.531/0.540 | |
| Present disclosure 8-3 | 050/050 | 650/3523/6958 | 85/135/140 | 353/371/371 | 448/506/511 | 0.350/0.404/0.409 | First + Second + Magnetic member + Ferrite + AL |
| Comparative example 8-A3 | 050/025 | 500/2317/4556 | 88/141/147 | 516/628/635 | 604/769/782 | 0.500/0.615/0.625 | |
| Present disclosure 8-4 | 050/050 | 440/2438/4843 | 73/109/112 | 485/509/509 | 558/617/621 | 0.446/0.494/0.497 | First + Second + Magnetic block + Ferrite + AL |
| Comparative example 8-A4 | 050/025 | 350/1628/3214 | 74/112/116 | 658/823/831 | 732/935/947 | 0.600/0.748/0.758 | |
| Present disclosure 8-5 | 050/050 | 1050/6075/12126 | - | 198/211/211 | 198/211/211 | 0.158/0.169/0.169 | First + Second + Magnetic member + Ferrite in rod form |
| Comparative example 8-A5 | 050/025 | 720/3695/7271 | - | 278/347/353 | 278/347/353 | 0.225/0.278/0.282 | |

"Present disclosure 8-1 to 8-5" in the vertical column on the left in Table 16 represents the coil components according to the embodiments 8-1 to 8-5, and right-hand columns represent the condition of the coil thickness in the simulation, the Q value that is calculated in the simulation, the loss, and the resistance of the coil components according to the embodiments in this order. Similarly, the right-hand columns on the right of "Comparative examples 8-A1 to 8-A5" in the vertical column on the left in Table 16 represent the condition of the coil thickness in the simulation, the Q value that is calculated in the simulation, the loss, and the resistance regarding the comparative examples in this order. The frequency of the alternating current to be applied to each coil component is set at 1.1 MHz, 6.78 MHz, or 13.56 MHz, and the simulation is run.

As clear from Table 16, the Q value of the coil components according to the embodiments 8-1 to 8-5 is larger than the Q value of the corresponding comparative examples. The loss at the coil components according to the embodiments 8-1 to 8-5 is less than the loss at the comparative examples. The alternating-current resistance of the coil components according to the embodiments 8-1 to 8-5 is less than that of the comparative examples.

It can be confirmed from the result of the simulation illustrated in Table 16 that the performance of the coil components according to the embodiments 8-1 to 8-5 is excellent.

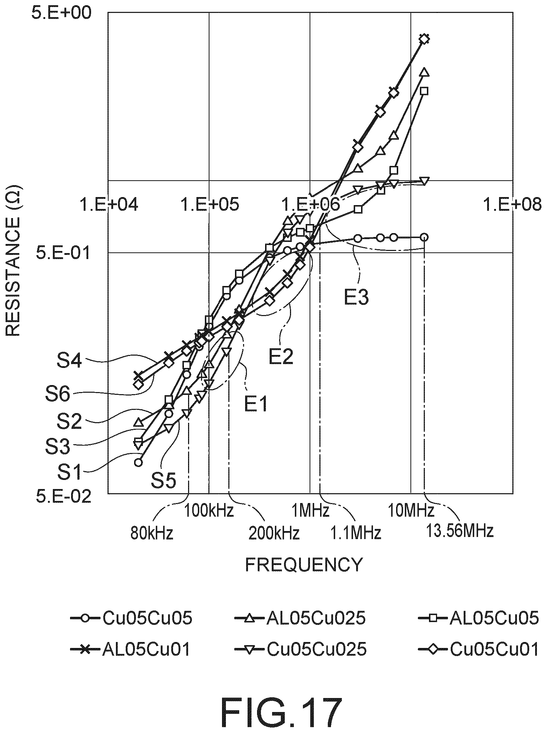

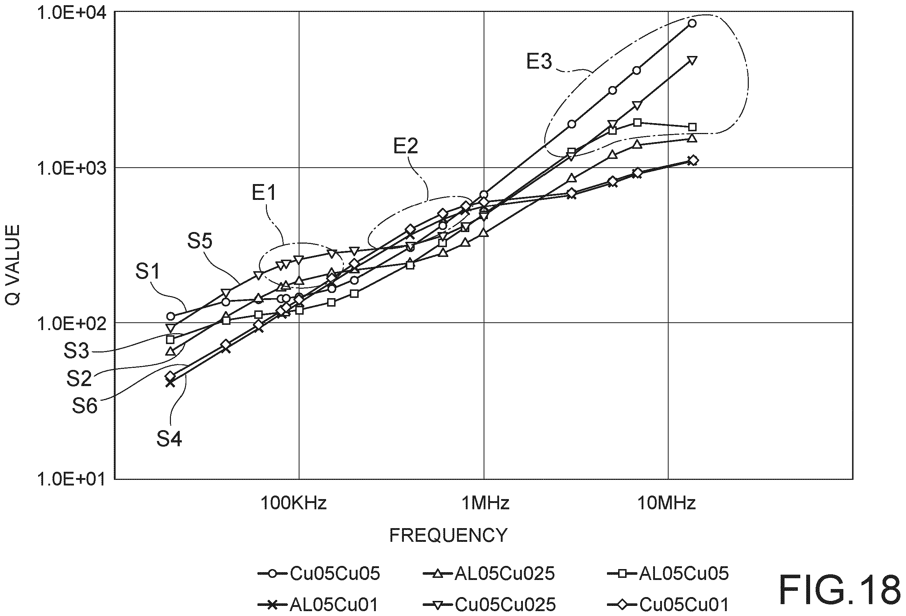

Fig. 17 illustrates a graph for describing a relationship between the alternating-current resistance and the thicknesses of the planar coils (11 and 12) of the coil component according to the embodiment illustrated in Fig. 2 to Fig. 5. Fig. 18 illustrates a graph for describing a relationship between the Q value and the thicknesses of the planar coils (11 and 12) of the coil component according to the embodiment illustrated in Fig. 2 to Fig. 5. Fig. 17 and Fig. 18 are created based on the alternating-current resistance and the Q value that are calculated in a manner in which multiple values are set to the thickness of the first planar coil 11 and the thickness of the second planar coil 12, and the frequency of the electric current to be applied is changed. Specifically, the alternating-current resistance and the Q value are calculated from simulation. The simulation is run by using Femtet (registered trademark) made by Murata Software Co., Ltd.

Individual conditions regarding the thicknesses and materials of the first planar coil 11 and the second planar coil 12 are as follows.

· Condition 1: The material of the first planar coil 11 is copper, and the thickness is 0.5 mm. The material of the second planar coil 12 is copper, and the thickness is 0.5 mm (Cu0.5/Cu0.5).

· Condition 2: The material of the first planar coil 11 is aluminum, and the thickness is 0.5 mm. The material of the second planar coil 12 is copper, and the thickness is 0.25 mm (Al0.5/Cu0.25).

· Condition 3: The material of the first planar coil 11 is aluminum, and the thickness is 0.5 mm. The material of the second planar coil 12 is copper, and the thickness is 0.5 mm (Al0.5/Cu0.5).

· Condition 4: The material of the first planar coil 11 is aluminum, and the thickness is 0.5 mm. The material of the second planar coil 12 is copper, and the thickness is 0.1 mm (Al0.5/Cu0.1).

· Condition 5: The material of the first planar coil 11 is copper, and the thickness is 0.5 mm. The material of the second planar coil 12 is copper, and the thickness is 0.25 mm (Cu0.5/Cu0.25).

· Condition 6: The material of the first planar coil 11 is copper, and the thickness is 0.5 mm. The material of the second planar coil 12 is copper, and the thickness is 0.1 mm (Cu0.5/Cu0.1).

Conditions that are shared in the simulation are as follows.

· The electrical conductivity of the first planar coil 11 composed of aluminum is $3.77 \times 10^7$ [S/m]. The electrical conductivity of the second planar coil 12 composed of copper is $5.98 \times 10^7$ [S/m].

· The relative permeability of the magnetic shield member 20 is 3000, and the relative permeability of the holding body 30 is 5.0.

· The widths of the conductor 11E of the first planar coil 11 and the conductor 12E of the second planar coil 12 in the direction of the line IV-IV illustrated in Fig. 2 are 200 mm, and the widths of the conductor 11E of the first planar coil 11 and the conductor 12E of the second planar coil 12 in the direction perpendicular to the line IV-IV are 200 mm.

In Fig. 17 and Fig. 18, a line illustrated by using a reference sign S1 represents the result in the condition 1 (Cu0.5/Cu0.5), a line illustrated by using a reference sign S2 represents the result in the condition 2 (Al0.5/Cu0.25), a line illustrated by using a reference sign S3 represents the result in the condition 3 (Al0.5/Cu0.5), a line illustrated by using a reference sign S4 represents the result in the condition 4 (Al0.5/Cu0.1), a line illustrated by using a reference sign S5 represents the result in the condition 5 (Cu0.5/Cu0.25), and a line illustrated by using a reference sign S6 represents the result in the condition 6 (Cu0.5/Cu0.1).

Referring to Fig. 17, for example, in the condition 2 and the condition 5 in which the thickness of the second planar coil is 0.25 mm, the alternating-current resistance is lower than that in the other conditions when the frequency of the electric current to be applied is 80 KHz to 200 KHz. Referring to Fig. 18, in the condition 2 and the condition 5, the Q value is larger than that in the other conditions.

In the condition 4 and the condition 6 in which the thickness of the second planar coil is 0.1 mm, the alternating-current resistance is lower than that in the other conditions when the frequency of the electric current to be applied is 200 KHz to 1 MHz. Referring to Fig. 18, in the condition 4 and the condition 6, the Q value is larger than that in the other conditions in a wider range.

In the condition 1 and the condition 3 in which the thickness of the second planar coil is 0.5 mm, the alternating-current resistance is less than that in the other conditions when the frequency of the electric current to be applied is 1.1 MHz or more. Specifically, in the condition 1, the alternating-current resistance is less than that in the other conditions at 1.1 MHz or more and 13.56 MHz or less, and in the condition 3, the alternating-current resistance is less than that in the other conditions except for the condition 1 at 1 MHz or more and 7 MHz or less. Referring to Fig. 18, in the condition 1 and the condition 3, the Q value is larger than that in the other conditions in a wider range.

The coil component according to the embodiment 6-2 described above is found from a tendency for the alternating-current resistance to be less than that in the other conditions and for the Q value to be larger than that in the other conditions when the frequency of the electric current to be applied is 80 KHz to 200 KHz in the condition 2 and the condition 5 in which the thickness of the second planar coil described above is 0.25 mm, which is seen in Fig. 17 and Fig. 18, and multiple simulations or experiments that demonstrate the same tendency. A range corresponding to the coil component according to the embodiment 6-2 is surrounded by a reference sign E1 in Fig. 17 and Fig. 18. It can be said from, for example, the result in Fig. 17 that the coil component according to the embodiment 6-2 functions so as to generate the magnetic field while decreasing the alternating-current resistance as much as possible. Accordingly, as for the coil component according to the embodiment 6-2, it can be said that the planar coils (11 and 12) that are multilayer efficiently function in the case where the alternating current at 100 KHz or more and less than 200 KHz is applied, or the alternating magnetic field at 100 KHz or more and less than 200 KHz is applied. It can be understood from the result in Fig. 18 that efficient transmission can occur.

The result in Fig. 17 is the result of evaluation in the case where the alternating current is applied, and the magnetic field is generated, but the alternating-current resistance is decreased as much as possible also in the case where the alternating magnetic field is received, and the alternating current is generated. Accordingly, the result of evaluation in Fig. 17 corroborates that the coil component according to the embodiment 6-2 effectively functions in the case where the alternating magnetic field at 100 KHz or more and less than 200 KHz is applied.

The coil component according to the embodiment 7-2 is found from a tendency for the alternating-current resistance to be less than that in the other conditions and for the Q value to be larger than that in the other conditions when the frequency of the electric current to be applied is 200 KHz to 1 MHz in the condition 4 and the condition 6 in which the thickness of the second planar coil described above is 0.1 mm, which is seen in Fig. 17 and Fig. 18, and multiple simulations and experiments that demonstrate the same tendency. A range corresponding to the coil component according to the embodiment 7-2 is surrounded by a reference sign E2 in Fig. 17 and Fig. 18. It can be said from, for example, the result in Fig. 17 that the coil component according to the embodiment 7-2 functions so as to generate the magnetic field while decreasing the alternating-current resistance as much as possible. Accordingly, as for the coil component according to the embodiment 7-2, it can be said that the planar coils (11 and 12) that are multilayer efficiently function in the case where the alternating current at 200 KHz or more and 1 MHz or less is applied, or the alternating magnetic field at 200 KHz or more and 1 MHz or less is applied. It can be understood from the result in Fig. 18 that efficient transmission can occur.

The coil component according to the embodiment 8-2 is found from a tendency for the alternating-current resistance to be less than that in the other conditions and for the Q value to be larger than that in the other conditions when the frequency of the electric current to be applied is 1.1 MHz or more in the condition 1 and the condition 3 in which the thickness of the second planar coil described above is 0.5 mm, which is seen in Fig. 17 and Fig. 18, and multiple simulations and experiments that demonstrate the same tendency. A range corresponding to the coil component according to the embodiment 8-2 is surrounded by a reference sign E3 in Fig. 17 and Fig. 18. It can be said from, for example, the result in Fig. 17 that the coil component according to the embodiment 8-2 functions so as to generate the magnetic field while decreasing the alternating-current resistance as much as possible. Accordingly, as for the coil component according to the embodiment 8-2, it can be said that the planar coils (11 and 12) that are multilayer efficiently function in the case where the alternating current at 1.1 MHz or more is applied, or the alternating magnetic field at 1.1 MHz or more is applied. It can be understood from the result in Fig. 18 that efficient transmission can occur.

To be precise, as for the coil component according to the embodiment 8-2 in the condition 1 (Cu0.5/Cu0.5), the planar coils (11 and 12) that are multilayer efficiently function in the case where an alternating current or an alternating magnetic field at 1.1 MHz or more and 13.56 MHz or less is applied. As for the coil component according to the embodiment 8-2 in the condition 3 (AL0.5/Cu0.5), the planar coils (11 and 12) that are multilayer efficiently function in the case where an alternating current or an alternating magnetic field at 1.1 MHz or more and 7 MHz or less is applied.

The embodiments of the present disclosure are described above, and the embodiments described above may be modified in various ways. Such modifications are included in the technical range of the present disclosure.

Reference Signs List

S⋯power transmission system
1⋯power transmitter
1A⋯high-frequency current applying unit
2⋯power receiver
2A⋯converter
10, 10', 10A⋯coil component
11⋯first planar coil
11n⋯turn portion
11ns1⋯first straight portion
11nc1⋯first corner portion
11ns2⋯second straight portion
11nc2⋯second corner portion
11ns3⋯third straight portion
11nc3⋯third corner portion
11E⋯conductor
12⋯second planar coil
12n⋯turn portion
12ns1⋯first straight portion
12nc1⋯first corner portion
12ns2⋯second straight portion
12nc2⋯second corner portion
12ns3⋯third straight portion
12nc3⋯third corner portion
12E⋯conductor
14⋯connection wiring line portion
20⋯magnetic shield member
30⋯holding body
31⋯first layer
32⋯second layer
33⋯third layer
34⋯wall portion
35⋯guide holding plate portion
301⋯first piece
302⋯second piece
303⋯third piece
60⋯second magnetic shield member
70⋯magnetic block material
C1⋯first central axis
C2⋯second central axis

## Claims

**1.** A coil component comprising:

a first planar coil;
a second planar coil that is stacked with the first planar coil; and
a magnetic member that exerts magnetism and that includes a portion covering a surface of the first planar coil opposite a surface that faces the second planar coil,
wherein the first planar coil and the second planar coil are connected to each other in series, and a thickness of the second planar coil is 0.15 mm or more and 0.35 mm or less.

2. The coil component according to Claim 1, wherein the first planar coil and the second planar coil are configured such that an alternating current at 79 KHz or more and 90 KHz or less is applied, or an alternating magnetic field at 79 KHz or more and 90 KHz or less is applied.

3. The coil component according to Claim 1, further comprising: a first magnetic shield member that faces a surface of the covering portion of the magnetic member opposite a surface that faces the first planar coil; and

a second magnetic shield member that faces a surface of the first magnetic shield member opposite a surface that faces the covering portion of the magnetic member,
wherein a material of the first magnetic shield member and a material of the second magnetic shield member differ from each other.

4. The coil component according to Claim 3, wherein volume resistivity of the first magnetic shield member is higher than volume resistivity of the second magnetic shield member, and
wherein relative permeability of the first magnetic shield member is higher than relative permeability of the second magnetic shield member.

5. The coil component according to Claim 3, wherein the first magnetic shield member contains ferrite in a plate form.

6. The coil component according to Claim 3, wherein relative permeability of the first magnetic shield member is 500 or more.

7. The coil component according to Claim 3, wherein the second magnetic shield member contains aluminum.

8. The coil component according to Claim 1, wherein the covering portion of the magnetic member entirely covers the opposite surface of the first planar coil.

9. The coil component according to Claim 1, wherein the covering portion of the magnetic member partly covers the opposite surface of the first planar coil.

10. The coil component according to Claim 9, wherein the magnetic member includes multiple pieces that are separated from each other.

11. The coil component according to Claim 9, wherein the first planar coil includes a straight portion that linearly extends and a corner portion that is connected to the straight portion and that curves, and
wherein the covering portion of the magnetic member covers the straight portion but does not cover the corner portion.

12. A power transmitter comprising: the coil component according to any one of Claim 1 to Claim 11.

13. The power transmitter according to Claim 12, further comprising: a high-frequency current applying unit that applies an alternating current at 79 KHz or more and 90 KHz or less to the coil component.

14. A power receiver comprising: the coil component according to any one of Claim 1 to Claim 11.

15. The power receiver according to Claim 14, further comprising: a converter that converts an alternating current at 79 KHz or more and 90 KHz or less that the coil component generates due to electromagnetic induction into a direct current.

16. A power transmission system comprising: a power transmitter; and a power receiver, wherein at least the power transmitter or the power receiver includes the coil component according to any one of Claim 1 to Claim 11.

17. A power transmission method comprising: a step of applying an alternating current at 79 KHz or more and 90 KHz or less to the coil component of a power transmitter that includes the coil component according to any one of Claim 1 to Claim 11; and

a step of causing a power receiver to generate an electric current, based on a magnetic field that is generated by the power transmitter.

**18.** A coil component comprising:

a first planar coil;
a second planar coil that is stacked with the first planar coil; and
a magnetic member that exerts magnetism and that includes a portion covering a surface of the first planar coil opposite a surface that faces the second planar coil,
wherein the first planar coil and the second planar coil are connected to each other in series, and a thickness of the second planar coil is 0.225 mm or more and 0.275 mm or less, and
wherein the first planar coil and the second planar coil are configured such that an alternating current at 100 KHz or more and less than 200 KHz is applied, or an alternating magnetic field at 100 KHz or more and less than 200 KHz is applied.

**19.** A coil component comprising:

a first planar coil;
a second planar coil that is stacked with the first planar coil; and
a magnetic member that exerts magnetism and that includes a portion covering a surface of the first planar coil opposite a surface that faces the second planar coil,
wherein the first planar coil and the second planar coil are connected to each other in series, and a thickness of the second planar coil is 0.075 mm or more and 0.175 mm or less, and
wherein the first planar coil and the second planar coil are configured such that an alternating current at 200 KHz or more and 1 MHz or less is applied, or an alternating magnetic field at 200 KHz or more and 1 MHz or less is applied.

**20.** A coil component comprising:

a first planar coil;
a second planar coil that is stacked with the first planar coil; and
a magnetic member that exerts magnetism and that includes a portion covering a surface of the first planar coil opposite a surface that faces the second planar coil,
wherein the first planar coil and the second planar coil are connected to each other in series,
wherein a thickness of the second planar coil is 0.45 mm or more, and
wherein the first planar coil and the second planar coil are configured such that an alternating current at 1.1 MHz or more is applied, or an alternating magnetic field at 1.1 MHz or more is applied.

FIG. 1

FIG. 2

FIG. 3

FIG. 4

111A  121A  12,12E

34,30
33,30
32,30
31,30

111B  121B  11,11E

20

## FIG. 5

THICKNESS OF SECOND PLANAR COIL (mm)

Q VALUE

200

190

180

170

160

150

0.10   0.20   0.30   0.40   0.50   0.60

## FIG. 6

FIG. 7

FIG. 8

FIG. 9

FIG.10

FIG.11

FIG.12

EP 4 542 594 A1

FIG.13

FIG.14

FIG.15

FIG.16

FIG.17

FIG.18

EP 4 542 594 A1

## INTERNATIONAL SEARCH REPORT

International application No.

**PCT/JP2023/022454**

### A. CLASSIFICATION OF SUBJECT MATTER

*H01F 38/14*(2006.01)i; *H01F 3/08*(2006.01)i; *H01F 5/00*(2006.01)i; *H01F 17/00*(2006.01)i; *H01F 17/04*(2006.01)i; *H01F 27/28*(2006.01)i; *H01F 27/30*(2006.01)i; *H01F 27/36*(2006.01)i; *H02J 7/00*(2006.01)i; *H02J 50/10*(2016.01)i; *H02J 50/12*(2016.01)i; *H02J 50/70*(2016.01)i

FI: H01F38/14; H01F3/08; H01F5/00 F; H01F5/00 M; H01F5/00 R; H01F17/00 B; H01F17/00 C; H01F17/00 D; H01F17/04 F; H01F27/28 K; H01F27/28 147; H01F27/30 160; H01F27/36 101; H02J7/00 P; H02J7/00 301D; H02J50/10; H02J50/12; H02J50/70

According to International Patent Classification (IPC) or to both national classification and IPC

### B. FIELDS SEARCHED

Minimum documentation searched (classification system followed by classification symbols)

H01F38/14; H01F3/08; H01F5/00; H01F17/00; H01F17/04; H01F27/28; H01F27/30; H01F27/36; H02J7/00; H02J50/10; H02J50/12; H02J50/70

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-27112 A (UNIV SHINSHU) 22 February 2021 (2021-02-22) | 1-20 |
| A | JP 2017-168522 A (IHI CORP) 21 September 2017 (2017-09-21) | 1-20 |
| A | JP 2019-186235 A (TDK CORP) 24 October 2019 (2019-10-24) | 1-20 |
| A | JP 2013-26005 A (SANYO ELECTRIC CO LTD) 04 February 2013 (2013-02-04) | 1-20 |
| A | WO 2020/045661 A1 (DAI NIPPON PRINTING CO., LTD.) 05 March 2020 (2020-03-05) | 1-20 |
| A | JP 2015-144160 A (DEXERIALS CORP) 06 August 2015 (2015-08-06) | 1-20 |
| A | JP 2013-17255 A (EQUOS RESEARCH CO LTD) 24 January 2013 (2013-01-24) | 1-20 |
| A | JP 2021-77826 A (TDK CORP) 20 May 2021 (2021-05-20) | 1-20 |

☑ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 August 2023** | **22 August 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | Telephone No. |

Form PCT/ISA/210 (second sheet) (January 2015)

**INTERNATIONAL SEARCH REPORT**

International application No.

**PCT/JP2023/022454**

**C.    DOCUMENTS CONSIDERED TO BE RELEVANT**

| Category* | Citation of document, with indication, where appropriate, of the relevant passages | Relevant to claim No. |
|---|---|---|
| A | JP 2021-34707 A (SPIRAL TECH CO LTD) 01 March 2021 (2021-03-01) | 1-20 |

Form PCT/ISA/210 (second sheet) (January 2015)

## INTERNATIONAL SEARCH REPORT
### Information on patent family members

| International application No. |
| --- |
| **PCT/JP2023/022454** |

| Patent document cited in search report | | | Publication date (day/month/year) | Patent family member(s) | | | Publication date (day/month/year) |
| --- | --- | --- | --- | --- | --- | --- | --- |
| JP | 2021-27112 | A | 22 February 2021 | (Family: none) | | | |
| JP | 2017-168522 | A | 21 September 2017 | US | 2019/0006094 | A1 | |
| | | | | WO | 2017/159167 | A1 | |
| | | | | EP | 3432328 | A1 | |
| | | | | CN | 108431913 | A | |
| JP | 2019-186235 | A | 24 October 2019 | US | 2019/0304670 | A1 | |
| | | | | DE | 102019107583 | A1 | |
| | | | | CN | 110323049 | A | |
| JP | 2013-26005 | A | 04 February 2013 | (Family: none) | | | |
| WO | 2020/045661 | A1 | 05 March 2020 | US | 2021/0321529 | A1 | |
| | | | | US | 2022/0418150 | A1 | |
| | | | | EP | 3846186 | A1 | |
| | | | | CN | 112955985 | A | |
| JP | 2015-144160 | A | 06 August 2015 | US | 2015/0222017 | A1 | |
| | | | | CN | 104821437 | A | |
| JP | 2013-17255 | A | 24 January 2013 | US | 2012/0217819 | A1 | |
| | | | | EP | 2455253 | A2 | |
| | | | | CN | 102457108 | A | |
| JP | 2021-77826 | A | 20 May 2021 | (Family: none) | | | |
| JP | 2021-34707 | A | 01 March 2021 | (Family: none) | | | |

Form PCT/ISA/210 (patent family annex) (January 2015)

**EP 4 542 594 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020047614 A